(19) **Europäisches Patentamt / European Patent Office / Office européen des brevets**

(11) **EP 4 261 563 A2**

(12) # EUROPEAN PATENT APPLICATION

(43) Date of publication:
**18.10.2023 Bulletin 2023/42**

(21) Application number: **23163806.5**

(22) Date of filing: **23.03.2023**

(51) International Patent Classification (IPC):
**G01S 5/02** *(2010.01)* **G01S 13/76** *(2006.01)*
**G01S 5/14** *(2006.01)* **G06F 21/53** *(2013.01)*

(52) Cooperative Patent Classification (CPC):
**G01S 5/021; G01S 5/0205; G01S 5/02213;
G01S 5/0226; G01S 13/765;** G01S 5/02216;
G01S 5/14; G06F 21/53

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.03.2022 US 202263322760 P**

(71) Applicant: **Wi-LAN Research Inc.
Vista, CA 92081 (US)**

(72) Inventors:
• **MUMTAZ, Arslan
Islamabad (PK)**
• **NOMAN, Zain
Islamabad (PK)**
• **RAMZAN, Rashad
Islamabad (PK)**
• **FAROOQ, Muddassar
Islamabad (PK)**
• **STANWOOD, Kenneth
Vista (US)**

(74) Representative: **Mewburn Ellis LLP
Aurora Building
Counterslip
Bristol BS1 6BX (GB)**

(54) **SYSTEM AND METHOD FOR DETERMINING A CLOCK OFFSET BETWEEN A USER EQUIPMENT CLOCK SIGNAL AND A SATELLITE CLOCK SIGNAL IN A NON-TERRESTRIAL COMMUNICATION NETWORK**

(57) A clock offset between a user equipment (UE) clock signal and a clock signal of a cluster member satellite (CMS) of a non-terrestrial communication network is determined by (a) detecting a positive edge of the CMS clock signal and in response thereto transmitting a CMS positive edge detection signal from the CMS to the UE, and starting a CMS counter of the CMS; (b) receiving in the CMS from the UE a UE positive edge detection signal generated in the UE in response to detection of a positive edge of the UE clock signal, and a UE counter value of a UE counter of the UE, wherein the UE counter value is determined based on the UE counter starting in response to receipt in the UE of the CMS positive edge detection signal and the UE counter stopping in response to generation of the UE positive edge detection signal; (c) stopping the CMS counter of the CMS in response to receiving the UE positive edge detection signal and determining a CMS counter value of the CMS counter; and (d) determining the clock offset as a function of the UE counter value, the CMS counter value and a common time period T of the UE clock signal and the CMS clock signal.

Figure.7

**Description**

CROSS REFERENCE TO RELATED APPLICATIONS:

This application is a non-provisional application of and claims priority to U.S. Provisional Patent Application Serial No. 63/322,760, filed March 23, 2022, titled "Secure Hardware Enclave System and Method for Geolocation Computation Using Leo Satellite Assistance", the disclosure of which is incorporated herein by reference.

FIELD OF THE INVENTION:

The invention described herein discloses a geolocation computation system and method that incorporates securely transmitting a hardware-based clock signal from a User Equipment (UE) to a constellation of low earth orbiting satellites (LEOs) or other non-terrestrial network (NTN) for use in advanced wireless communication systems such as 5G, 6G, and industry 4.0 systems. The invention further describes a system and method that can be used to synchronize the clock signals among the entities that are involved in the geolocation computation method.

BACKGROUND OF THE INVENTION:

Current and future wireless and mobile communication systems are planned to have a high data rate and ubiquitous global connectivity that will result in an exchange of data among trillions of devices, including but not limited to smart devices such as wearable smart healthcare devices, IoT sensors and control devices, and e-commerce and Fintech nodes including digital wallets. These devices demand ultra-reliable and low latency communication networks. The terrestrial network infrastructure and traditional mobile wireless networks alone might not be able to meet the demands of such systems. NTNs such as Starlink are already being deployed, and the third-generation partnership project (3GPP) recommends using LEOs in 5G networks and beyond.

For many application use cases of 5G/6G networks and beyond, it is desirable to ascertain the accurate location of devices, collectively referred to as user equipment (UE) hereafter. Satellite-based location systems such as the US Global Positioning System (GPS) or the European Global Navigation Satellite System (GNSS), though ubiquitously available, are unable to provide a reliable method to UEs to securely determine their geolocation. It is already demonstrated that a malicious entity can transmit fake GPS signals, causing a device to think it is at a location where it is not. This attack could be applied, for instance, to delivery drones to cause them to deliver their cargo to the wrong location. It is desirable to have a system and method that allows a device to be confident of its true geolocation. The method described in "Secure Location of Wireless Devices Using LEO Satellite Assistance", that is a co-pending US patent application 63/266,487 (which is included by reference) proposes a novel method to compute the geolocation of a UE.

In US patent application 63/266,487, the uplink Tx timing advance is maintained by a serving cluster member satellite (CMS) using timing advance commands that are sent to a UE. These timing advance commands are based on the measurements on the uplink transmissions received from that UE. For example, the serving CMS measures for each UE, the difference between the time when each UE is scheduled to transmit and when that transmission is received by the serving satellite to determine the value of the timing advance required for a particular UE. Therefore, the UE should transmit early, by the amount of its Tx Time Advance, such that its transmissions are received at the serving satellite at its expected time. Generally, applications and users are allowed to access and control networking drivers, firmware, and hardware registers on UEs. This can be exploited by malicious entities to control, inspect, or alter information transmitted, received, or processed by the UE including the time information, for instance by manipulating time registers. Such malicious entities may, for instance, change the one-way transmission time by delaying or advancing the transmission of the signal to the serving CMS relative to when they should transmit based on the Tx time advance. In these scenarios, CMSs will calculate an incorrect time of transmission ($T_{trans}$) for that particular UE and assign an incorrect new Tx timing advance. Alternatively, if the LTE transmits a fake $T_{trans}$, it will also result in an incorrect distance calculation at CMSs, both an incorrect Tx time advance and an incorrect $T_{trans}$ will result in calculating incorrect geolocation coordinates using the trilateration method. Thus, by transmitting at a time different than expected by the CMSs, a malicious entity can make a UE appear to be at a different location than it really is. Additionally, a malicious entity may attack a UE by masquerading a UE located at a different position to appear to be the UE under attack. Consequently, a UE might be tricked into believing the incorrect geolocation coordinates to be its true coordinates, or the system may be tricked into thinking the LTE is at a different location than it is.

SUMMARY OF THE INVENTION:

A system and method for transmitting a stable clock signal, derived from a precision clock generator to a non-terrestrial network of LEO satellites is described. The clock signal is generated through a stable hardware-based precision clock and transmitted directly to a network of LEO satellites without involving any software or firmware in its data path along the transmission chain. This will ensure that no malicious activity can be carried out via software or firmware hooks. An isolated and secure private module namely UE secure positioning enclave (USPE) is incorporated in the transceiver of a UE to protect the generation and transmission of the clock signal that can be used by LEO satellites to compute the geolocation coordinates of the UE. A USPE module generates a stable clock signal through a UE clock signal manager (UCSM) module, computes a counter value that is used by serving CMSs to find the offset between the LTE's clock signal and clock signal of the serving CMS, and encrypts the information by using a security inspector before transmitting it to a network of LEOs. A UE clock signal analyzer (UCSA) module is deployed on the USPE to extract information from PHY channels of the receive chain and supply it to the UCSM through an alternate data path that does not involve the vulnerable firmware. The UCSA module also transmits the clock signal and relevant data through a data path that is inaccessible to malicious users and applications.

To keep track of geolocation coordinates of UE in a communication system's database, a hardwired secret device ID (SDID) is also stored on the security inspector inside the UCSM of a USPE module at the time of manufacturing or commissioning. The SDID will be transmitted for a predetermined time before transmitting the actual clock signal. In a further aspect of the invention, the clock signal transmitted by LTE is compared with the clock signal, generated by CMS and having the same specifications, to compute the time delay. The time delay between the two clock signals can be used to find the distance between the UE and CMS if the offset between two clock signals is already known. To generate the clock signal on the serving CMS and other CMSs, a CMS secure positioning enclave (CSPE) is used. The CSPE module is comprised of a CMS clock signal manager (CCSM) module to manage and correlate the clock signals as well as a CMS Clock signal analyzer (CCSA) module to receive the clock signal and transmit other signals relevant to CSPE. The clock signal of the UE should be received by a minimum of three CMSs for computing the geolocation of the UE. According to a preferred embodiment of the invention, only serving CMS computes the time offset of its clock signal from the clock signal of the UE. Other CMSs are required to synchronize their clock signals with the clock signal of the serving CMS. Once the clock signal of the other CMSs and serving CMS are synchronized, the time offset of a UE computed by the serving CMS can be used by other CMSs as the time offset of the LTE clock signal and clock signal of other CMSs is the same. Therefore, the clock signals of the serving CMS and other CMSs should be synchronized with each other. An inter-satellite clock signal synchronization method is also described. According to an embodiment of the invention, the clock signal of a dedicated satellite, termed henceforth as a cluster head satellite (CHS), is taken as a reference, and all of its neighboring CMSs synchronize their clock signals to it. Once the CMSs in a cluster are synchronized to the CHS, each of the CMS may become CHS for their neighboring CMSs whose clock signals have not yet been synchronized. In a further embodiment of the invention, the clock signal of a ground station is taken as a reference and satellites in its coverage space synchronize their clock signals to it. The synchronized satellites then act as a CHS for their neighboring satellites. In this scenario, the clock signals of ground stations should also be synchronized. The Synchronization method among ground stations may be carried out directly between stations or can be achieved through satellites in another embodiment.

BRIEF DESCRIPTION OF THE DRAWINGS:

A full understanding of the invention can be gained from the following description of the preferred embodiments when read in conjunction with the accompanying drawings in which:

The accompanying drawings, which are incorporated in and constitute part of this specification, illustrate embodiments of the invention and, together with the description, serve to explain the principles of the invention. The embodiments herein illustrate the invention for NTNs composed of LEOs; however, it can be adapted to other NTNs such as those using unmanned aircraft systems (UAS), high-altitude platforms (HAPs), or a mix of technologies. Furthermore, the embodiments illustrated herein are presently preferred, it being understood by those skilled in the art, however, the invention itself is not limited to the precise arrangements and instrumentalities shown, wherein:

Figure 1 is a functional block diagram of the secure positioning enclave module of a UE (USPE) that protects, generates and transmits the clock signal to LEO satellites;

Figure 2 is a functional block diagram of the secure positioning enclave module of a CMS (CSPE) that protects and generates a clock signal that is compared with the clock signal transmitted by the secure positioning enclave of a LTE to compute the time of flight;

Figure 3 is a functional block diagram of the clock signal manager (UCSM) of the secure positioning enclave of a LTE;

Figure 4 shows a preferred embodiment of a pulse generator;

Figure 5 shows an embodiment of the signal generated by the pulse generator;

Figure 6 is a functional block diagram of the clock signal manager (CCSM) of a CMS;

Figure 7 is the protocol ladder diagram that illustrates exemplary message exchanges to compute the offset between a LTE clock signal and the clock signal of a serving CMS;

Figure 8A illustrates the method to compute the offset between two waveforms of clock signals using the counter values of UE and serving CMS;

Figure 8B illustrates the method to compute the offset between two clock signals in a scenario where the offset between clock signals of the Clock Signal Manager of LTE and the Clock Signal Manager of serving CMS is greater than the time of flight of the clock signal transmitted by a UE and few processing delays;

Figure 8C describes the PHY frame structure to be used for the synchronization procedure;

Figure 9 shows a protocol ladder diagram for exchange of messages between different entities that are involved in computing the geolocation of a LTE;

Figure 10 shows the functional block diagram of the LTE clock offset calculator that resides inside Clock Signal Manager of a LTE;

Figure 11 is a flowchart that depicts the process for computing the counter value using the clock offset calculator of a LTE according to an aspect of the invention;

Figure 12 shows the functional block diagram of the CMS waveform synchronizer that resides on the Clock Signal Manager of a CMS;

Figure 13 is a flowchart depicting the offset computing method for the waveform synchronizer of a CMS according to an aspect of the invention;

Figure 14 illustrates the method, used in the clock signal correlator of the CMS, to compute Time of Flight (ToF) by performing time delay analysis of the clock signal that is transmitted by a UE;

Figure 15 illustrates the usage of an N-bit counter in the clock signal correlator of the CMS to compute time delay of the two clock signals according to an aspect of the invention;

Figure 16 is a system-level illustration of an embodiment of the disclosed invention where clock signals of CMSs are synchronized;

Figure 17 illustrates the method to compute the offset between the clock signals of CHS and other CMSs;

Figure 18 shows the flow graph for the inter-satellite clock signal synchronization method;

Figure 19 shows the block diagram of a preferred embodiment of the Clock Signal Analyzer of a LTE;

Figure 20 is a functional block diagram of an example UE transceiver incorporating a UE Secure Positioning Enclave;

Figure 21 is a functional block diagram of a CMS that is a member of a cluster consisting of a plurality of CMSs.

## DETAILED DESCRIPTION OF THE INVENTION:

The figures and their corresponding embodiments provided in this disclosure are aspects of the present invention, and their advantages may be understood by referring to the figures and the following description. The description and features disclosed herein can be applied to accurately determine the geolocation of UE in NTNs deployed using LEOs. However, it can be adapted to other NTNs such as those using UAS or HAPs. Henceforth, the figures and embodiments depicted are for the sole purpose of clarity and by any means do not limit the scope of the invention.

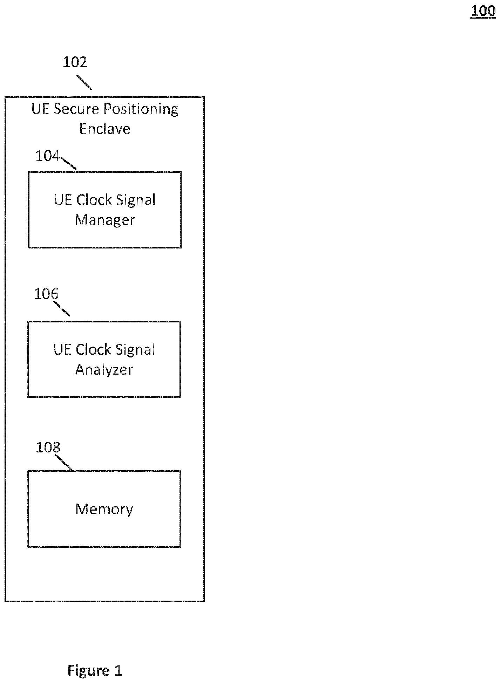

Figure 1 is a functional block diagram of a UE secure positioning enclave (USPE) module 102 that protects, generates, and transmits a clock signal to LEO satellites. The transmitted clock signal is used by the serving CMS or other CMSs to determine their time of flight (ToF) from the transmitting UE to the serving CMS or other CMSs. The serving CMS and other CMSs use ToF to compute the geolocation coordinates of a LTE. All sub-modules comprising USPE 102 are inside a secure island that provides no write hooks to applications or users through the firmware or kernel of the device that would enable them to modify the contents of its registers or internal memory 108. USPE module 102 provides a secure data path, inaccessible to the device firmware, for directly transmitting the clock signal and other information as RF signals. UE clock signal manager (UCSM) module 104 generates the clock signal, calculates the counter value that is used to compute the offset of the clock signal from a reference clock signal, and encrypts the information to authenticate the clock signal. UE clock signal analyzer (UCSA) module 106 extracts the scheduling information from the downlink and transmits the clock signals to the CMS from UCSM 104. UCSA module 106 extracts the scheduling information and positive edge indication signal from PHY channels of the receive chain and supplies them to UCSM module 104 through a data path that does not involve going through the device firmware. The UCSA module 106 also transmits the clock signal to the serving CMS and other CMSs and related data. Memory module 108 stores the data required for scheduling and security.

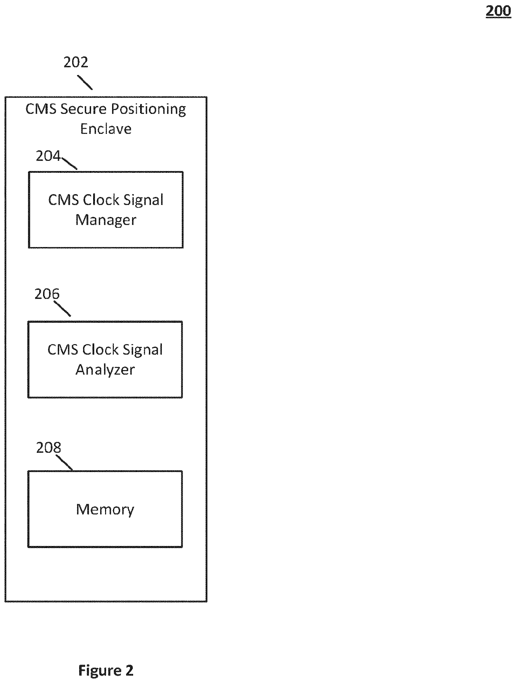

Figure 2 is a functional block diagram of a CMS secure positioning enclave (CSPE) module 202 that protects and generates a clock signal that is compared with the clock signal received from USPE 102 to compute the time difference between them. The Time difference or delay between the two clock signals is used to compute the ToF of a signal transmitted by a UE to serving and other CMSs provided the UE's clock signal and the clock signals of serving and other CMSs have the same specifications. To generate the clock signal on a serving CMS and other CMSs, CSPE module 202 is comprised of a CMS clock signal manager (CCSM) module 204 that generates, correlates, and executes the synchronization method of a clock signal; a CMS clock signal analyzer (CCSA) module 206 that receives the clock signal from the LTE and transmits other signals relevant to CSPE 202; and local secure memory 208. The clock signal of a UE should be received by a serving CMS and a minimum of two CMSs among other CMSs for computing the geolocation of the LTE by using the trilateration method. Therefore, the clock signals of three CMS's should be synchronized only among each other and only the serving CMS should compute the time offset of the clock signal of the UE with its own clock signal. The offset of the clock signal of the UE from the other CMSs is equal to the offset between the clock signal of the UE and the clock signal of serving CMS due to already synchronized clock signals of the serving CMS and other CMSs. CCSM module 204 executes the clock synchronization with other CMSs and it also computes the offset of clock signal of the serving CMS from the clock signal of the UE.

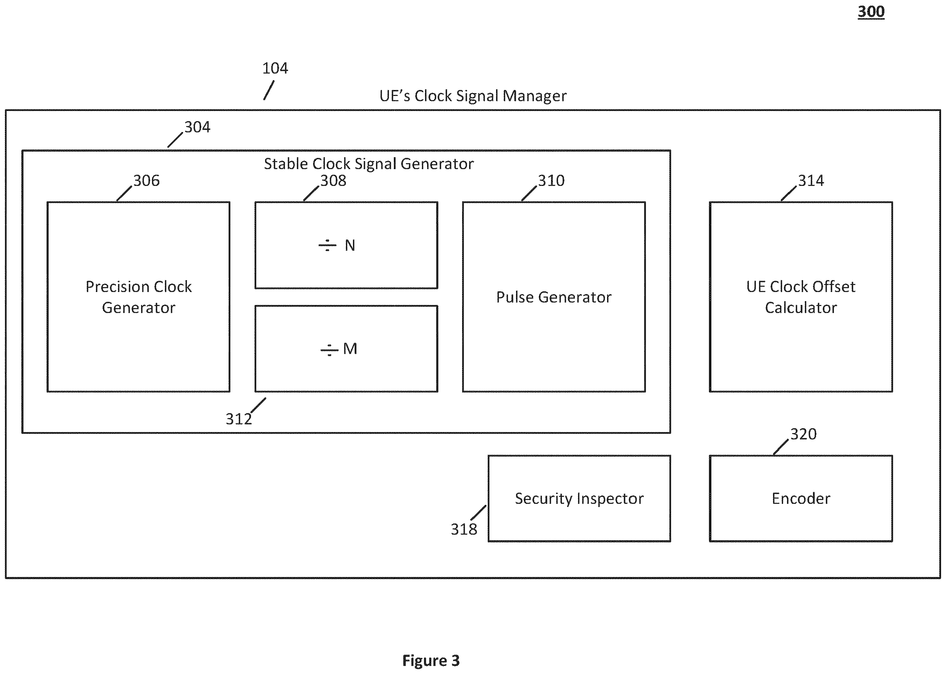

Figure 3 is a functional block diagram of UCSM 104 of USPE 102. UCSM 104 is comprised of a stable clock signal generator (SCSG) 304, a LTE clock offset calculator 314 that calculates and transmits the counter value that is used by the serving CMS to compute the offset between UE clock signal and the one generated by the SCSG 604 of a serving CMS, a security inspector 318 that executes hardware-based authentication and encryption methods, and an encoder 320 that encodes the data such as SDID. SCSG 304 is further comprised of a precision clock generator 306 that generates a stable high precision clock signal, an N frequency synthesizer 308 where N is a function of the maximum time of flight (ToF) of a clock signal for a given constellation of satellites, and an M frequency synthesizer 312 that provides a high frequency signal to pulse generator 310 for generating pulses of the clock signal. The value N in N frequency synthesizer 308 ensures that the pulse repetition period of clock signal is greater than the maximum ToF. This constraint avoids any ambiguity that may arise as a result of the shift in the number of cycles in the clock signal transmitted by a UE. It also ensures that ToF of all UEs is less than the pulse repetition period of the clock signal, and the serving or other CMSs compute ToF from the time shift in the received UE clock signal compared with that of the clock signal of the serving or other CMS provided the offset between two is already known. Furthermore, to ensure a minimal level of jitter and noise in the clock signal, a stable high-frequency signal from the M frequency synthesizer 312 is used in the mixer of IF-RF conversion module in a standard LTE transceiver for heterodyning.

The typical device identification of a UE in the communication system is the MAC address of the UE. A malicious entity can easily alter or impersonate the MAC address of a UE. In such a scenario, the geolocation coordinates of the malicious entity will be stored against the MAC address of an impersonated UE and the system will be unable to identify the true geolocation of a particular UE. To resolve this anomaly, a unique secret device ID (SDID), specified by 2048 bits or any other size is written once into the security inspector 318, for instance into a write-once register or memory, at the time of manufacturing at the production plant or at the time of commissioning. This SDID is neither reprogrammable nor editable, as it is physically hardwired on the chip containing security inspector 318. This provides another factor of secure identification and makes it more difficult for malicious entities to masquerade as legitimate devices in the system compared to the scenario when the MAC address or other similar ID is used in the standard communications protocols.

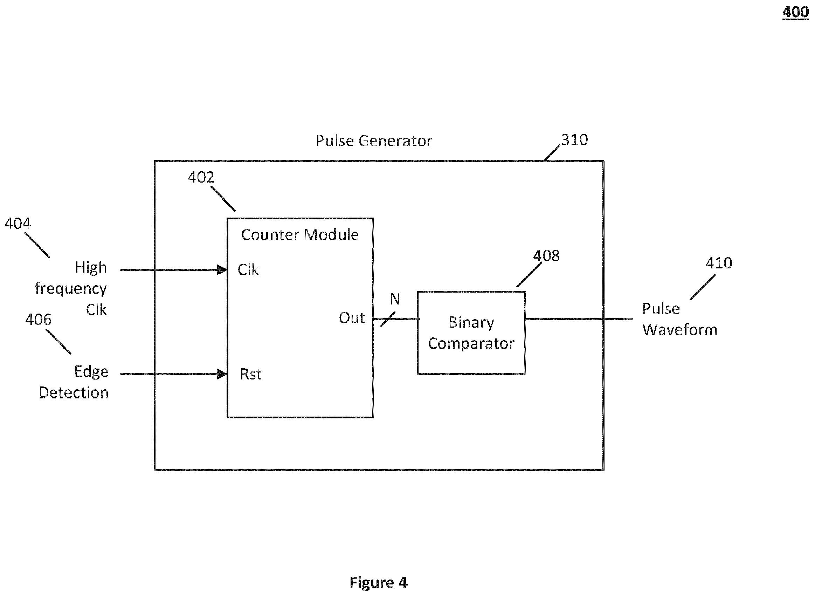

Figure 4 shows a preferred embodiment of pulse generator 310. N-bit-counter 402 is driven by a high-frequency clock 404. In one aspect of the invention, high-frequency clock 404 may be the M synthesized signal of UE's precision clock generated by M frequency synthesizer 312. The number of bits for the N-bit-counter of counter module 402 are chosen in such a way that the resultant value does not overflow during one cycle of the N frequency synthesizer 308 i.e.

$$2^{counter\_size} < Repetition\ Period\ (in\ no\ of\ cycles\ of\ High\ freq\ clk\ 404) \qquad (1)$$

The counter value is reset at every rising edge of the N frequency-divided signal used for edge detection 406. The output of counter module 402 is fed to a binary comparator block 408 that has a standard implementation known to the one skilled in the art. The pulse waveform 410 is the output of binary comparator 408.

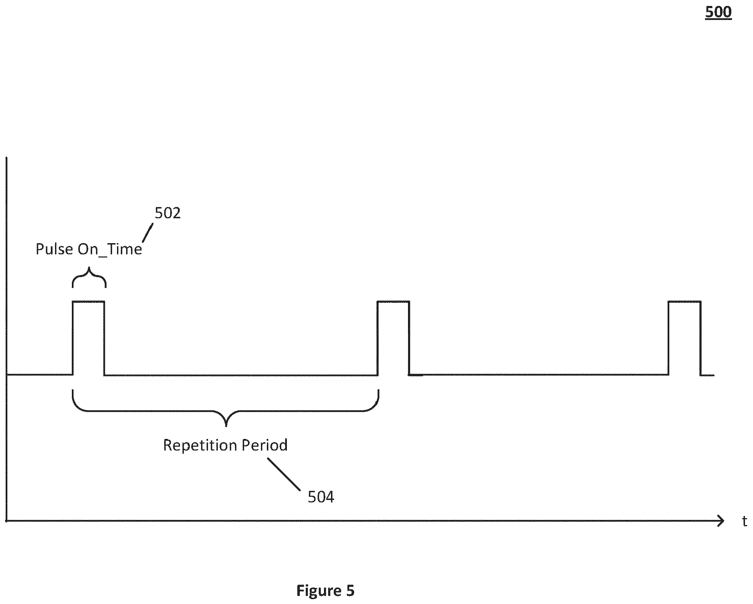

Figure 5 shows the signal generated by an embodiment of the pulse generator 310. The signal is specially curated so that it meets the requirements of trilateration as well as the requirements of the communication protocol used in the invention. For instance, in OFDM, signals are modulated on subcarriers that have specific bandwidth constraints. For LTE, the subcarrier spacing is very low (15 kHz). To ensure that these bandwidth constraints are met, the pulse-on time 502 may be altered. Smaller the pulse-on time, the greater the bandwidth and vice versa. The frequency domain representation of clock signal 500 is a sinc function. The null-to-null bandwidth of this function can be calculated by:

$$BW_{null\_to\_null} = \frac{2}{Pulse\_On\_Time} \qquad (2)$$

The repetition period 504 is determined by taking into account the maximum ToF based upon the constellation topology to ensure that the trilateration method does not add any ambiguity.

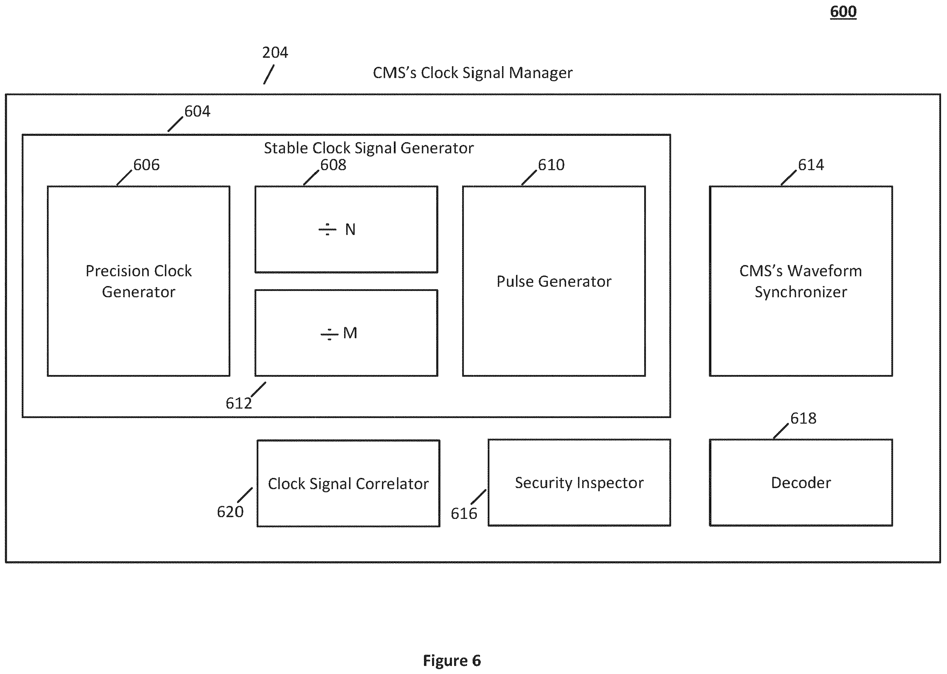

Figure 6 is a functional block diagram of a CCSM 204 of CSPE 202. CCSM 204 is used by the serving CMS or other CMSs to generate a clock signal that can be correlated with the received clock signal of a UE to compute the ToF after computing the offset between the LTE clock signal and the clock signal of the serving CMS. CCSM 204 is also used for the purpose of synchronizing the clock signal among serving CMS and other CMSs. CCSM 204 is comprised of an SCSG 604, a waveform synchronizer 614 for computing the offset between the waveform generated by SCSG 604 of the serving CMS and the one generated by the SCSG 304 of a UE, a security inspector 616 that decrypts the information such as SDID and positive edge indication signal that is transmitted by a UE, decoder 618 to decode the encoded data transmitted by a LTE, and a clock signal correlator 620 module to correlate the clock signal transmitted by USPE 102 with the clock signal generated by SCSG 604 to compute ToF. In an embodiment, clock signal correlator 620 and CMS waveform synchronizer 614 are also responsible for executing an inter-satellite clock signal synchronization method. SCSG 604 generates the clock signal with the same specifications as that of the clock signal generated by SCSG 304 of UCSM 104. SCSG 604 is further comprised of a precision clock generator 606, an N frequency synthesizer 608 where N is the same frequency value that is used by the frequency synthesizer 308, an M frequency synthesizer 612 where M is the same frequency as used by the frequency synthesizer 312, and a pulse generator 610 in which the repetition period of the pulse is the same as that of the pulse generator 310.

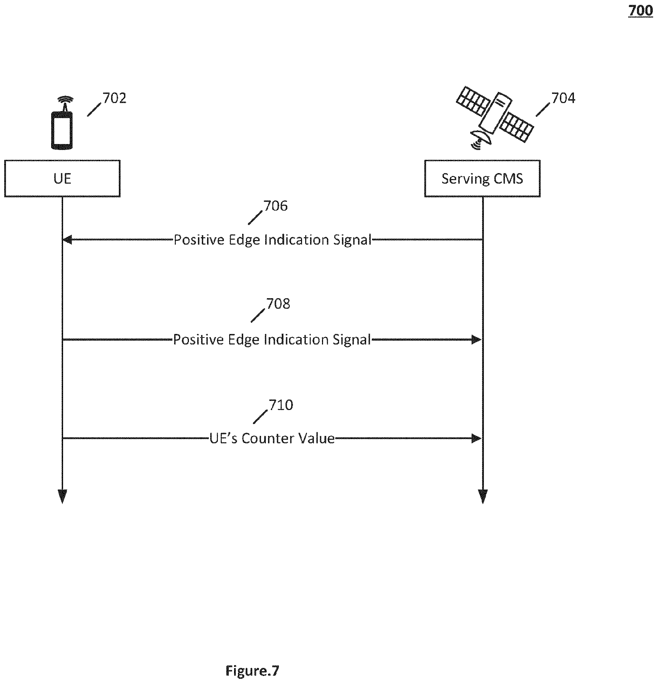

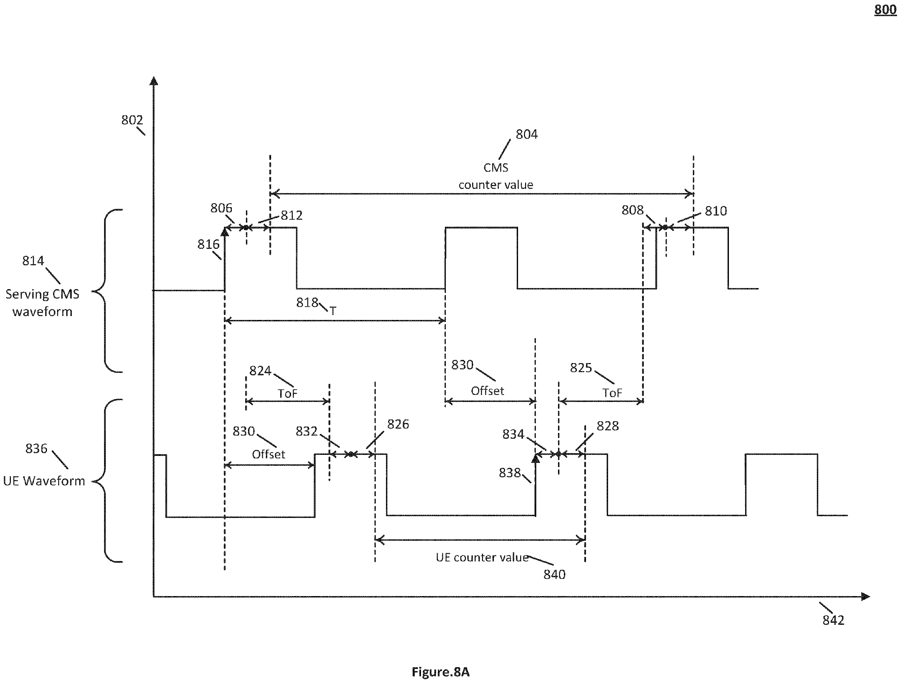

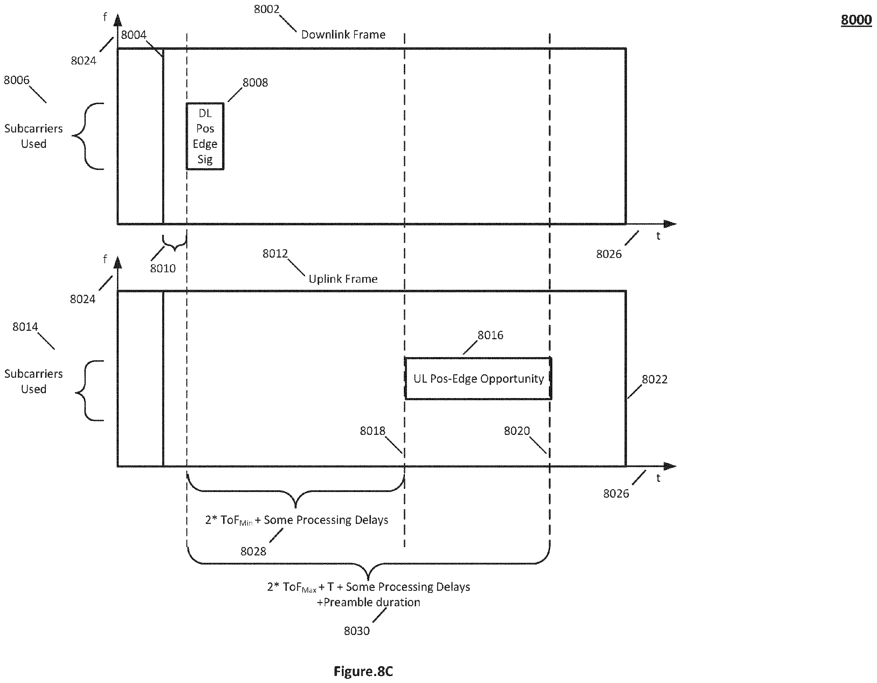

Figure 7 depicts the protocol ladder diagram 700 illustrating exemplary messages exchange to compute the time offset between the clock signal generated by UE 702 and the clock signal generated by serving CMS 704. Serving CMS 704 transmits the positive edge indication signal 706 and starts the counter module contained in waveform synchronizer 614 of serving CMS 704. Positive edge indication signal 706 can be a signal with any fixed preamble to identify it uniquely and is transmitted on the positive edge of the clock signal. The positive edge indication signal 706 of serving CMS 704 can be used by multiple UEs that are in the coverage area of the serving CMS 704. In Figure 7, the time offset computation protocol is illustrated for one such UE. The UE 702 receives the positive edge indication signal 706 and starts the counter module inside LTE clock offset calculator 314 of LTE 702. The LTE clock offset calculator 314 of LTE 702 is required to transmit a positive edge indication signal 708 at the next positive edge of the N clock signal generated by SCSG 304 of UE 702 during a scheduled slot agreed upon between the two communicating entities and subsequently stop the counter module inside UE clock offset calculator 314 of UE 702. The scheduled slot is further described in detail in Figure 8C. In order to allow multiple such LTEs to transmit the positive edge indication signal simultaneously in the scheduled slot, UEs should use orthogonal preambles for the positive edge indication signal 708. Serving CMS 704 can have multiple instances of waveform synchronizer 614 for each UE. In Figure 7, serving CMS 704 receives the positive edge indication signal 708 and stops the counter contained in waveform synchronizer 614 of serving CMS 704. After two-way transfer of the positive edge indication signals is complete, LTE 702 must transmit its counter value contained in the counter module of LTE offset calculator 314 to serving CMS 704 in a separate message 710. Serving CMS 704 can then compute the offset between the clock signal generated by SCSG 604 of serving CMS 704 and SCSG 304 of UE 702 as illustrated in Figure 8A. Figure 8A illustrates a method to compute the offset between the two clock signal waveforms by using the counter values of UE 702 and serving CMS 704. In Figure 8A, a method to compute the time offset is shown for a particular scenario where offset 830 < (edge detection delay 806 + ToF 824 + preamble duration 832 + UE processing delays 826). In Figure 8A, waveform 836 is the clock signal generated by the SCSG 304 of LTE 702, while waveform 814 is the clock signal generated by SCSG 604 of CMS 704. In Figure 8A, 842 represents the time axis and 802 indicates the waveform axis. Serving CMS 704 transmits the positive edge indication signal 706 after detecting the positive edge 816 of the waveform of the clock signal generated by SCSG 604. In Figure 8A, 806 represents the time delay to detect positive edge 816 and is termed as CMS edge detection delay 806, whereas 812 represents the time duration of the preamble of the positive edge detection signal 706 and is termed as CMS preamble duration 812. Once the serving CMS 704 has transmitted the preamble of the positive edge indication signal 706, it starts the counter module inside waveform synchronizer 614 of serving CMS 704. The transmitted preamble of the positive edge indication signal 706 is received by LTE 702 after ToF 824. Time duration 832 represents the preamble duration of the positive edge indication signal 706 on the UE's waveform 836. The time duration consumed in processing and detecting the positive edge indication signal 706 by LTE 702 after receiving it from serving CMS 704 is represented by the duration 826 and is termed as the UE processing delays 826. Once the UE 704 has detected the preamble of the positive edge indication signal 704, the counter module inside LTE clock offset calculator 314 of LTE 702 is started. UE 702 preferably detects the next positive edge 838 of the LTE waveform 836 of the clock signal, transmits the preamble of the positive edge detection signal 708 and stops its counter module inside the UE clock offset calculator 314 giving a counter value 840. Time duration 834 represents the time delay to detect the positive edge 838 and is termed as UE edge detection delay 834, whereas time duration 828 represents the time duration of the preamble of the positive edge detection signal 708 and is termed as UE preamble duration 828. The CMS preamble duration 812 and LTE preamble duration 828 are assumed to be same. The Serving CMS 704 receives the preamble of the positive edge indication signal 708 after ToF 824 and stops CMS the counter module inside waveform synchronizer 614 of serving CMS 704 resulting in the CMS counter value 804. Time duration 808 represents the LTE's preamble duration on serving CMS waveform 814 and time duration 810 represents the CMS processing delays. From Figure 8A, it can be illustrated that serving CMS counter value 804 is:

$$Serving\ CMS\ Counter\ Value\ 804 = [\ T\ 818 + Offset\ 830 +$$

$$UE\ Edge\ Detection\ Delay\ 834 + ToF\ 824\ + UE\ Preamble\ Duration\ 808 +$$

$$CMS\ processing\ Delay\ 810 - (CMS\ Preamble\ Duration\ 812 +$$

$$CMS\ Edge\ Detection\ Delay\ 806)\ ] \qquad\qquad Eq.\ (3)$$

If UE preamble duration 808 and CMS preamble duration 812 are equal, and UE edge detection delay 834 and CMS edge detection delay 806 are equal, then the CMS counter value 804 becomes,

$$Serving\ CMS\ Counter\ Value\ 804 \quad = \quad [\ T\ 818 + ToF\ 824\ + offset\ 830 +$$

$$CMS\ processing\ Delay\ 810] \qquad\qquad Eq.\ (4)$$

Whereas UE counter value 840 of UE 702 is given by:

$$UE\ Counter\ Value\ 840 = [\ T\ 818\ + offset\ 830 +$$

$$UE\ Edge\ Detection\ Delay\ 834 + UE\ Preamble\ Duration\ 828 -$$

$$-(CMS\ Edge\ Detection\ Delay\ 806 + ToF\ 824 + CMS\ Preamble\ Duration\ 832 +$$

$$UE\ processing\ Delay\ 826)\ ] \qquad\qquad Eq.\ (5)$$

If UE preamble duration 828 and CMS preamble duration 832 are equal, and UE edge detection delay 834 and CMS edge detection delay 806 are equal, then the UE counter value 840 becomes,

$$UE\ Counter\ Value\ 840 = [\ T\ 818 - ToF\ 824\ + offset\ 830 -$$

$$UE\ processing\ Delay\ 826] \qquad\qquad Eq.\ (6)$$

Where T 818 is the time period of the waveform generated by SCSGs of both LTE 702 and serving CMS 704. If we assume that the UE processing delay 826 and CMS processing delay 810 are equal, and ToF 824 and ToF 825 are equal, then the value of offset 830 in Figure 8A is computed by rearranging Eq. (4) and Eq. (6) as given by Eq (7).

$$offset\ 830 = [\ UE\ Counter\ Value\ 840 + CMS\ Counter\ Value\ 804 - 2 * (T\ 818)]/2$$

$$Eq.\ (7)$$

A more general form of the abovementioned equations are the ones in which (kT) instead of T is used where k is greater than 1 to cater for the scenarios when the positive edge indication signal is not transmitted by LTE and serving CMS on the next positive edge of their clocks after receiving the positive edge indication signal from the other party, for instance to allow time for the serving CMS to build and transmit positive edge indication signal.

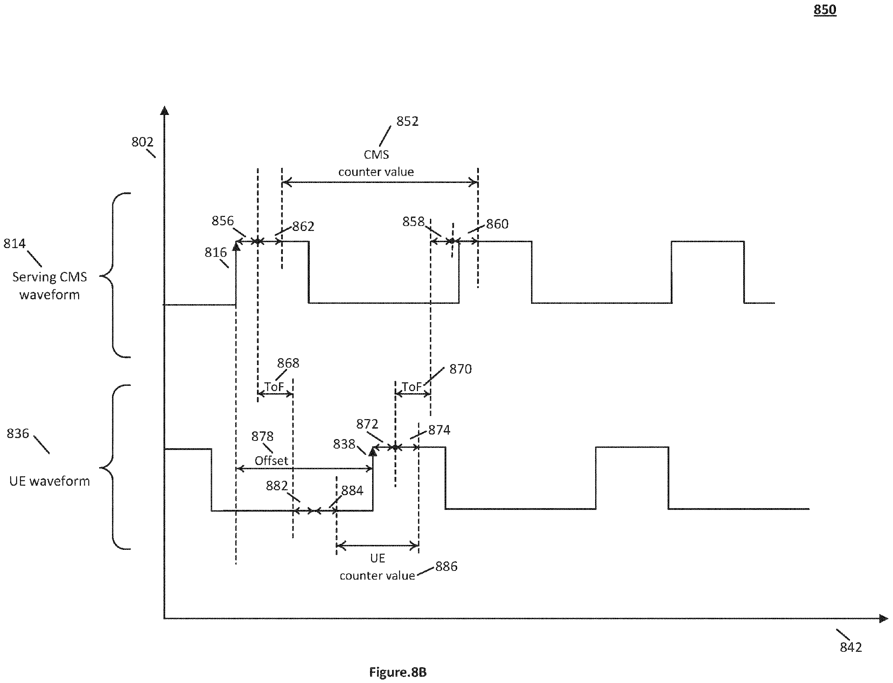

Figure 8B illustrates the method to compute the offset between two clock signals in a scenario where the offset 878 > (edge detection delay 856 + ToF 868+ preamble duration 822 + UE processing delays 884). In Figure 8B, it can be seen that the value of the serving CMS counter 852 is given by:

$$CMS\ Counter\ Value\ 852 \quad = \quad [\ ToF\ 870\ + offset\ 878 +$$

$$UE\ Edge\ Detection\ Delay\ 872 + UE\ Preamble\ Duration\ 858 +$$

$$CMS\ processing\ Delay\ 860 - (CMS\ Edge\ Detection\ Delay\ 856 +$$

$$CMS\ Preamble\ Duration\ 862)\ ] \qquad\qquad Eq.\ (8)$$

If UE preamble duration 858 and CMS preamble duration 862 are equal, and UE edge detection delay 872 and CMS edge detection delay 856 are equal, then the CMS counter value 852 becomes:

$$CMS\ Counter\ Value\ 852 \quad = \quad [\ ToF\ 870 + offset\ 878 + $$
$$CMS\ processing\ Delay\ 860] \qquad\qquad \text{Eq. (9)}$$

Whereas UE counter value 886 of UE 702 is given by:

$$UE\ Counter\ Value\ 886 \quad = \quad [\ offset\ 878 + UE\ Edge\ Detection\ Delay\ 872 - $$
$$ToF\ 868\ + UE\ Preamble\ Duration\ 874 - UE\ processing\ Delay\ 884 - $$
$$(CMS\ Edge\ Detection\ Delay\ 856 + CMS\ Preamble\ Duration\ 882)\ ] \quad \text{Eq. (10)}$$

If UE preamble duration 874 and CMS preamble duration 884 are equal, and UE edge detection delay 872 and CMS edge detection delay 856 are equal, then the UE counter value 886 becomes:

$$UE\ Counter\ Value\ 886 \quad = \quad [\ offset\ 878 - ToF\ 868\ - $$
$$UE\ processing\ Delay\ 884 \qquad \text{Eq. (11)}$$

In such scenario, if we assume that the UE processing delay 884 and CMS processing delay 860 are equal, and ToF 868 and ToF 870 are equal, then the value of offset 878 in Figure 8B is computed by

$$offset\ 878 = (UE\ Counter\ Value\ 886 + CMS\ Counter\ Value\ 852)/2 \quad \text{Eq. (12)}$$

In General, to determine which equations are to be used for computing offset, the following case-based method may be used:

$$if\ [(CMS\ Counter\ Value + UE\ Counter\ Value) - (2*T)] > 0 \qquad \text{Eq.(13)}$$

Then

$$offset\ = [CMSCounter\ Value\ + UE\ Counter\ Value - (2*T)]/2 \quad \text{Eq.(14)}$$

Whereas,

$$if\ [(CMS\ Counter\ Value + UE\ Counter\ Value) - (2*T)] < 0 \qquad \text{Eq. (15)}$$

Then

$$offset\ = (UE\ Counter\ Value + CMS\ Counter\ Value\ )/2 \qquad \text{Eq. (16)}$$

In cases whereas

$$if(CMS\ Counter\ Value + UE\ Counter\ Value) - 2*T = 0 \qquad \text{Eq. (17)}$$

Then

$$offset = 0 \qquad\qquad Eq.\ (18)$$

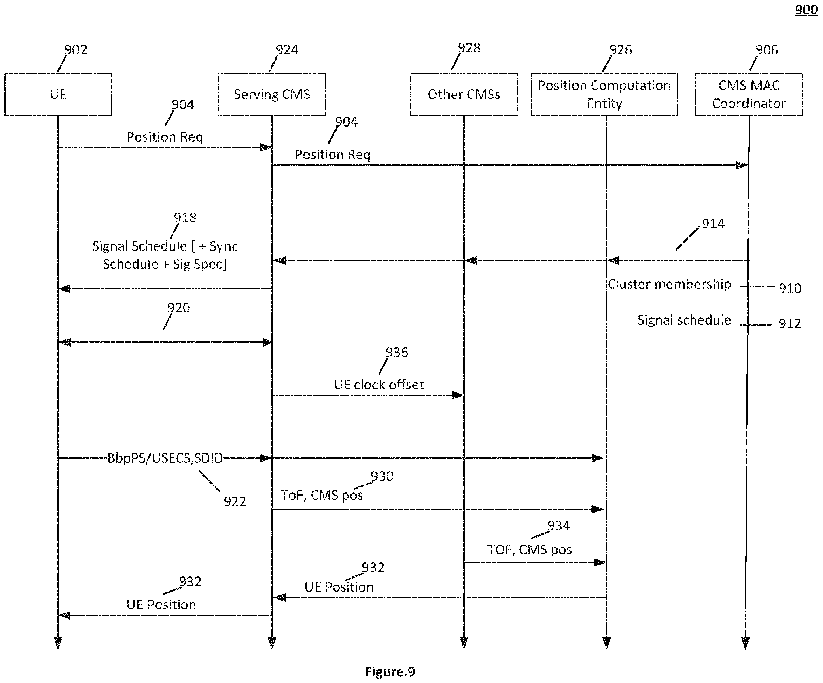

Figure 8C describes an embodiment of an FDD PHY frame structure to be used for the synchronization procedure of Figure 8A and Figure 8B. Frame 8000 shows the Downlink Frame 8002 whereas the vertical axis 8024 represents subcarriers and the horizontal axis 8026 represents time. Time 8004 indicates the start of the Frame 8000 while time 8022 indicates the end. Time duration 8010 indicates the delay from the start 8004 of the downlink frame after which the positive edge indication signal 8008 of serving CMS 704 is sent. The duration 8010 can be any value less than or equal to the time period T 818, as the positive edge of the clock signal of serving CMS 704 is bound to occur in this duration. The subcarriers 8006 to be used for this positive edge indication signal will be specified in the synchronization schedule as explained in Figure 9. While subcarriers 8006 are depicted as adjacent subcarriers, one skilled in the art would understand how they could alternatively be non-adjacent subcarriers. In the Uplink Frame 8012, time and frequency resources will be allotted to a LTL Pos-Edge Opportunity 8016. The positive edge indication signal of the UEs will be received by CMS 704 during this time slot and on the specified subcarrier frequencies. The allotted subcarrier frequencies 8014 will also be specified in the synchronization schedule. From Figure 8B it is evident that the minimum time duration 8028 after which the positive edge indication signal 708 of the UE may be received is be $2{*}ToF_{min}$ + some processing delays shown by marker 8018. Some processing delays here include the positive edge detection delay and hardware processing delays. Similarly, from Figure 8A, we can deduce that the maximum time duration 8030 after which positive edge indication signal 708 might arrive is $2{*}ToF_{max}$ + T + some processing delay + duration of the preamble used for positive edge indication signal 708, shown by marker 8020. Hence, we only need to allocate resources for UL Pos Edge Opportunity 8016 during the difference of the aforementioned maximum time slot 8030 and minimum time slot 8028. The time for LTL Pos-Edge Opportunity is:

$$UL\ Pos\_Edge\_Opportunity\ Time$$
$$= (2 * ToF_{max} + T + Some\ Processing\ Delays$$
$$+ Preamble\ Duration)\ 8030 - (2 * ToF_{min}ToF$$
$$+ Some\ Processing\ delays)\ 8028 \qquad Eq.\ 19$$

In one exemplary constellation of Starlink the orbital altitude of satellites may vary from 450 to 570 Km, this duration will be around 7.5ms [$ToF_{Max}$ = 3.5ms (for an altitude of 570 Km and an elevation angle of 30°), $ToF_{Min}$ = 1.5ms (for an altitude of 450 Km and an elevation angle of 90°), T >=3.5 ms, UE_processing_delays = negligible relative to ToF (sub-microseconds), preamble duration = negligible relative to ToF (sub-microseconds)]. Since PHY frames in 5G/6G systems are often shorter in duration than this, it is obvious to the one skilled in the art that the alignment of downlink frame 8002 and uplink frame 8012 is for ease of description only and uplink frame 8012 may be offset in time from downlink frame 8002 by some number of whole frames or a part of them.

In another embodiment, each LTE is allotted separate subcarriers in the uplink pos-edge opportunity 8016. In the preferred embodiment, however, to preserve resources, each LTE will transmit on the same set of subcarrier frequencies but will use orthogonal preambles to identify itself.

The complete synchronization procedure will take time duration 8010 + $2ToF_{Max}$ + T + preamble duration + some processing delay units of time to complete and it is approximately less than 11ms for the abovementioned constellation. Therefore, this method can fit into two LTE frames for the orbital altitudes mentioned in [0037].

Figure 9 shows a protocol ladder diagram for exchange of messages between different entities that are involved in computing the geolocation of LTE 902. The protocol of Figure 4 in the co-pending patent 63/266,487 is enhanced by adding the offset calculation method illustrated in Figure 7 of the current invention. UE 902 starts the procedure by requesting its position by sending position request 904 to serving CMS 924 which forwards it to CMS MAC coordinator 906. The CMS MAC coordinator 906 determines signal specification (Sig-Spec) in message 918 according to the security level required by LTE 902, and whether ToF calculation through clock synchronization method is required or trusted use of Tx Time Advance is sufficient. The decision-making process can be based on a multitude of factors such as suspicious UE movements or sensitive applications that demand relatively high security levels, etc. and can be performed by CMS MAC Coordinator or some other entity having a better knowledge of the requirements. This specification contains the type of signal a serving CMS requires from a LTE to transmit; the positioning signal from co-pending patent 63/266,487 (where baseband-based positioning signal is used), or the one from a LTE secure positioning enclave based clock signal (USPECS) used in this application. The CMS MAC coordinator 906 then sends a message consisting of cluster membership 910, signal schedule 912 that contains Sig-Spec to the serving and other CMSs in a message 914. In the scenario where signal specified in Sig-Spec in 918 is a USPECS, a synchronization schedule 916 may be sent to serving CMS 924. The synchronization schedule in message 918 also contains the timing information about when to invoke the offset computation method of Figure 7. Serving CMS 924 will send to UE 902 signal schedule that contains sync schedule, and Sig-Spec message 918.

If synchronization is needed, then the synchronization method of Figure 7 will be invoked at the time defined by the synchronization schedule as depicted in protocol messages 920. Serving CMS 924 transmits the UE clock offset 936 to other CMSs 928. If the clock signal of serving CMS 924 and other CMSs 928 are already synchronized, then the UE clock offset 936 that is computed between the UE 902 and serving CMS 924 is same for UE 902 and other CMSs 928. At the time specified in signal schedule 912, UE 902 will transmit either a baseband processor-generated positioning signal (BbpPS) as described in the co-pending US patent 63/266,487 or USPECS with the SDID of the UE in message 922 depending on the security requirements in Sig-Spec. In case the signal schedule 918 specifies using USPECS because of enhanced security, the USPE 102 of LTE 902 will ensure that a signal is sent directly from the USPE 102 to the RF front end; otherwise, BbpPS as described in the co-pending US patent 63/266,487 is sent through the baseband processor of UE 902. Once the signal 922 is received by the serving CMS 924 and other CMSs 928, they can compute ToF and transmit it with their own positions in messages 930 and 934 to position computation entity 926. Position computation entity 926 computes the position of UE 902 by trilateration using ToF and forwards it to the serving CMS 924 in message 932 which may be forwarded to LTE 902.

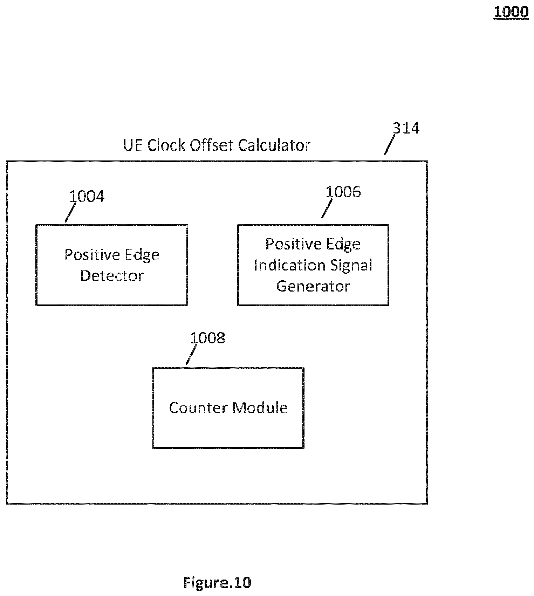

Figure 10 shows the functional block diagram of LTE clock offset calculator 314 installed inside UCSM 104 of UE 902. UE clock offset calculator 314 consists of a positive edge detector (PED) 1004 to detect the positive edge of the waveform signal generated by SCSG 304 of UE 902; a positive edge indication signal generator (PEISG) 1006 to generate a positive edge indication signal at the positive edge of the waveform signal and a counter module 1008.

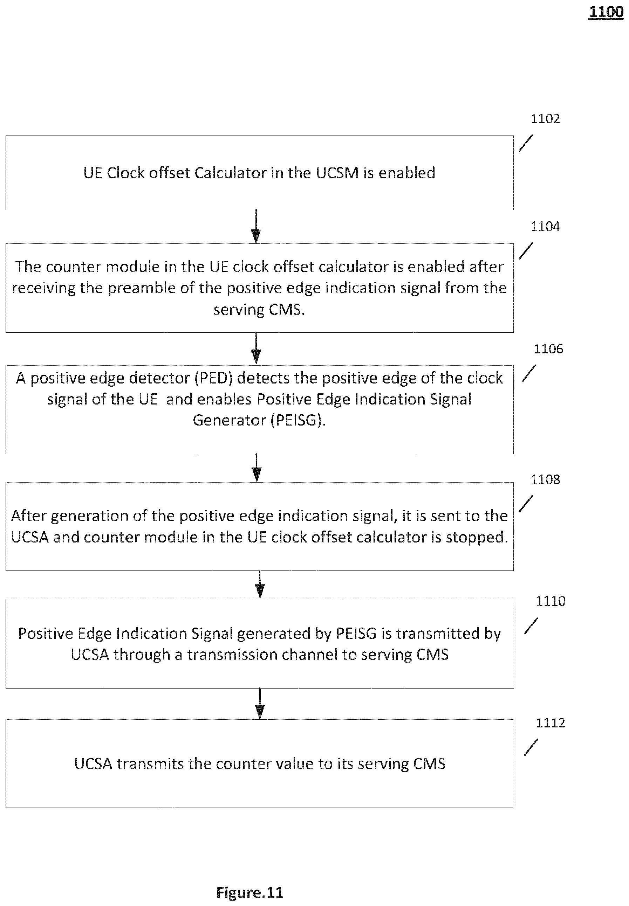

Figure 11 is a flowchart that depicts the method for computing the counter value in UE clock offset calculator 314 of UE 902 according to an aspect of the invention. The method begins at step 1102 in which LTE clock offset calculator 314 in UCSM 104 is enabled after receiving the signal schedule 918 from serving CMS 924. The counter module 1008 in the UE offset calculator 314 is started after receiving the positive edge indication signal 706 from serving CMS 924. Once the counter module 1008 in LTE clock offset calculator 314 is started, in step 1104, PED 1004 detects the positive edge of the waveform generated by SCSG 304. In step 1106, PED 1004 enables PEISG 1006 to generate a positive edge indication signal 708 after detecting the positive edge of the waveform. In step 1108, after generation of the positive edge indication signal 708 by PEISG 1006, counter module 1008 is stopped. In step 1110, positive edge indication signal 708 generated by PEISG 1006 is transmitted to UCSA 106 which transmits the indication signal to serving CMSs. In step 1112, UCSA 106 transmits UE counter value to its serving CMS 924.

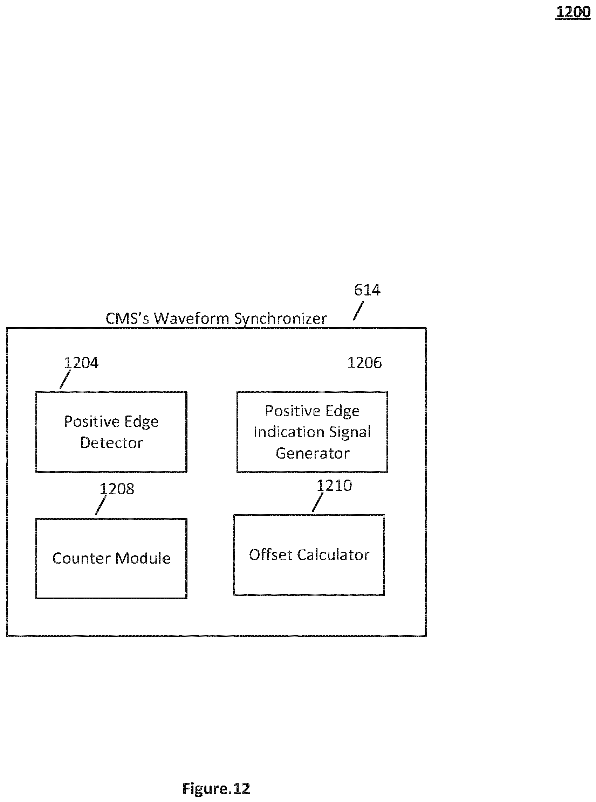

Figure 12 shows the functional block diagram of waveform synchronizer 614 installed on the CCSM 204 of serving CMS 924 or other CMSs 928. Waveform synchronizer 614 consists of a PED 1204 to detect the positive edge of the waveform of the clock signal generated by SCSG 604 of serving CMS 924 or other CMSs 928; a PEISG 1206 to generate a positive edge indication signal 706 at the positive edge of the waveform of the clock signal; a counter module 1208 and an offset calculator 1210.

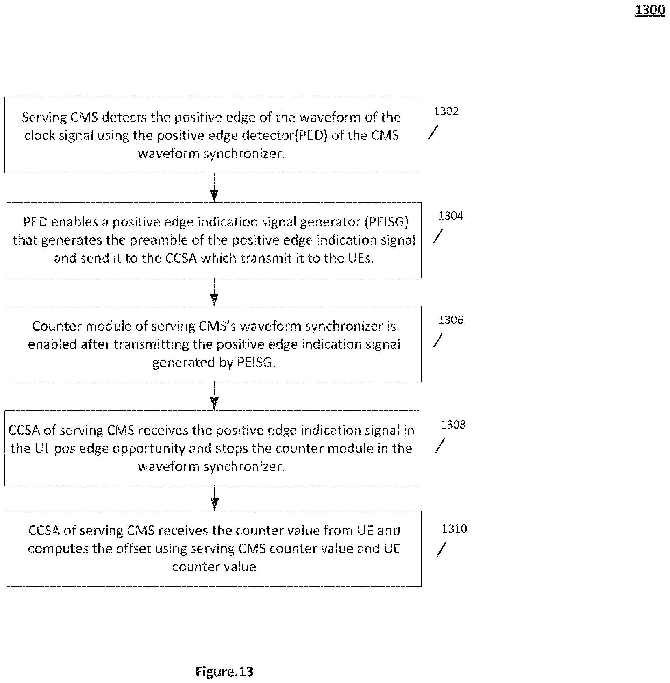

Figure 13 is a flowchart depicting the offset computation method for CMS waveform synchronizer 614 of serving CMS according to an aspect of the invention. The process begins at step 1302 in which serving CMS 924 detects the positive edge of the waveform of the clock signal using the positive edge detector (PED) 1204 of the waveform synchronizer 614. In step 1304, PED 1204 enables the PEISG 1206 inside the CMS waveform synchronizer 614 that generates the positive edge indication signal 706 and sends it to the CCSA 206, which transmits it to the LTEs. In step 1306, after transmission of the positive edge indication signal 706, counter module 1208 of CMS waveform synchronizer 614 is started. In step 1308, CCSA 206 of serving CMS 924 receives the preamble of positive edge indication signal 708 from the UE 902 and stops its counter module 1208. In step 1310, CCSA 206 receives UE's counter value 710 and computes the offset of the clock signal of UE using UE counter value and the counter value of serving CMS 924.

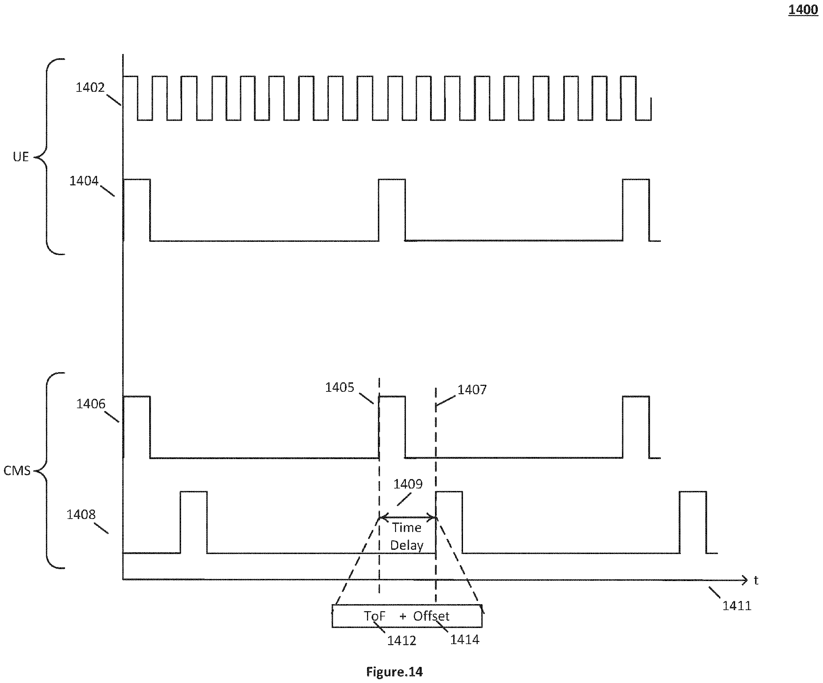

Figure 14 illustrates the method used in clock signal correlator 620 to compute ToF by performing time delay analysis of the clock signal that is transmitted by LTE 902. To remove ambiguity about the shift in the clock signal, the following constraint bounds the repetition period of the signal generated by SCSG 304 of UE 902 and SCSG 604 of serving CMS 924 and other CMSs 928:

$$ToF_{max} < Repetition\_Period\_of\_Pulses \qquad \text{Eq. (20)}$$

$ToF_{max}$ is the maximum amount of time it takes for a clock signal to reach serving CMS 924 or other CMSs 928 in the LEO constellation. The high-frequency signal 1402 of precision clock generator 306 of UE 902 is plotted against time axis 1411 in Figure 14. The clock signal generated by SCSG 304 of LTE 902 under the constraint of Eq. (20) is represented by waveform 1404. Signal 1406 is generated by SCSG 604 of serving CMS 924 or other CMSs 928. Here it is assumed that the serving CMS 924 of UE 902 has already computed the offset between the clock signal of UE 902 and the clock signal of serving CMS 924 and this offset is communicated to other CMSs. Clock signal 1408, received by serving CMS 924 or other CMSs 928 from UE 902, are time-delayed compared to that of the signal 1406 that is generated by SCSG 604 of serving CMS 924 or other CMSs 928. The time delay analysis of two waveform signals 1406 and 1408 allows the device to compute ToF. Time delay 1409 in the two waveforms 1406 and 1408 is computed by finding the difference between the time shown by dotted lines 1405 and 1407 at the positive edges of their corresponding waveforms respectively. ToF is computed as:

$$ToF\ 1412 = |time\ delay\ 1409 - offset\ 1414| \qquad \text{Eq. (21)}$$

Offset 1414 in the above equation is the time offset between the clock signal of serving CMS 924 and UE 902. Offset 1414 is same for serving CMS 924 and other CMSs 928 if the clock signals of serving CMS 924 and other CMSs 928 are synchronized with each other.

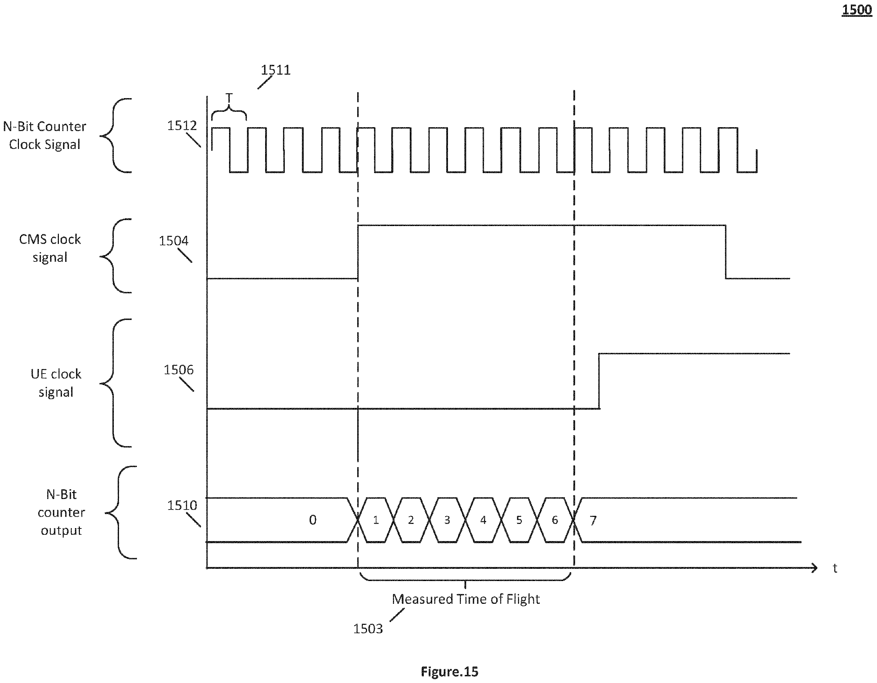

Figure 15 illustrates the utility of N-bit counter in clock signal correlator 620 of serving CMS 924 or other CMSs 928 to compute the time delay of the two clock signals according to an aspect of the invention. In Figure 15, for the purpose of clarity the waveform signals are labeled with even numbers while remaining information elements are labelled by using odd numbers. The clock and other signals are not drawn to the scale and are presented only for the purpose of enablement. The figure also does not depict the resetting circuitry of the counter values as the resetting logic is implicit and well known to those skilled in the art. The N-bit counter of clock signal correlator 620, whose circuitry is not displayed here, is started when signal 1504, generated by SCSG 604 of serving CMS 924 or other CMSs 928, is high and clock signal 1506 of UE 902 that is received by serving CMS 924 or other CMSs 928 is low. Counter output 1510 is an N-bit output that represents the number of cycles passed after the counter enable signal toggled to a high state. When clock signal 1506 received from LTE 902 goes high, then N-bit counter in signal correlator 620 stops counting. The time delay is computed by using counter output 1510 and time period 1511 of N-bit counter clock signal 1512. In this example, measured time delay 1503 is (7-1) × T. The maximum value of edge detecting error is one time period 1511 and it can further be reduced by using a higher frequency clock signal for clocking the counter in signal correlator 620. For example, for a counter with a clock frequency of 1 MHz, the trilateration error due to the edge detection error falls within the range of 300 m to 1 Km; for 10 MHz, 30 m to 100 m; for 100 MHz, 3 m to 10 m; and for 1 GHz, 30 cm to 100 cm. This error can be further minimized by using a counter with high clock frequency, for example, for a counter with a clock frequency of 100 GHz, the trilateration error due to the edge detection error falls within the range of 3 mm to 10 mm.

To compute the geolocation coordinates of UE 902, serving CMS 924 and at least two other CMSs 928 should receive its clock signal and compute the respective ToF that is used in the trilateration method to compute the geolocation coordinates of the UE 902. These ToF may only be correctly computed if the clock signals of UE 902, serving CMS 924 and other CMSs 928 are synchronized among each other. According to an aspect of the invention, if the clock signals of serving CMS 924 and other CMSs 928 are already synchronized, then the value of the time offset between the clock signal of other CMSs 928 and UE 902 will be the equal to the time offset between clock signal of serving CMS 924 and LTE 902. If serving CMS 924 and other CMSs 928 know the offset of the clock signal of UE 902 from their own clock signals, they can compute their respective ToFs. These ToFs can be used by position computation entity 926 to compute the geolocation coordinates of UE 902. Thus, the offset computation method of the clock signal is carried out between UE 902 and serving CMS only 924. The same offset can be used by other CMSs to compute the ToF using method described in Figure 14 and Figure 15 if the intersatellite clock synchronization method has executed.

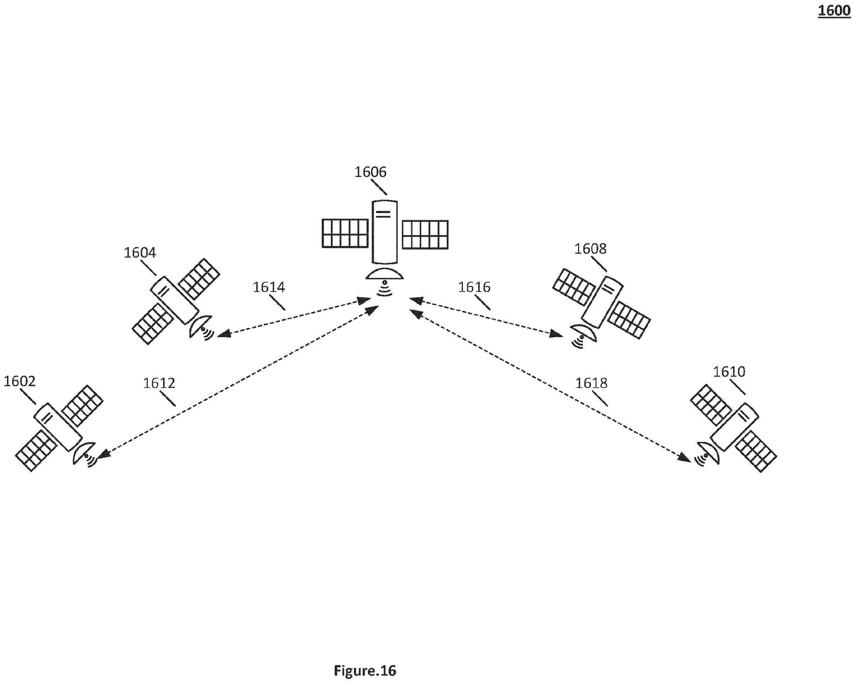

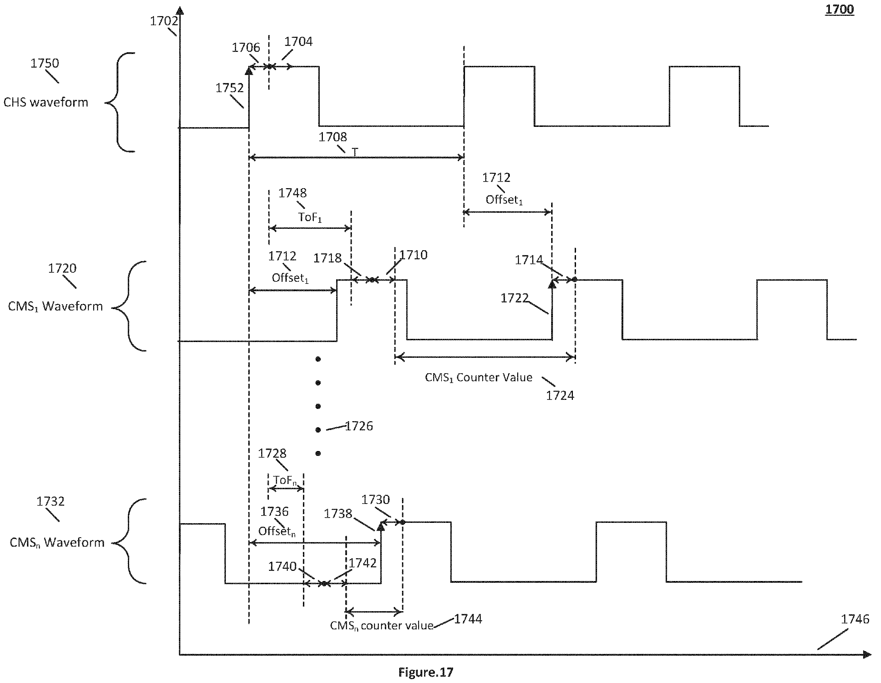

Figure 16 is a system-level illustration of inter-satellite clock synchronization process. In Figure 16, satellite 1606 acts as a cluster head satellite (CHS) for other CMSs 1602, 1604, 1608 and 1610 that are connected to CHS 1606 through side links 1612, 1614, 1616 and 1618 respectively. Initially, the clock signal synchronization method is executed between CHS and other CMSs. It is established in the prior art that the positions of CMSs are deterministic, and at any instant can be computed using their orbital velocities and initial known positions. Consequently, if a CMS among other CMSs knows its own position, then it can compute the position of its CHS and then apply standard methods to compute the ToF of a signal that it receives on its inter-satellite links. This known ToF can then be used in the computation of clock offset as described in Figure 17. The clock signal of CHS 1606 acts as the reference for other CMSs in the cluster and their clocks are synchronized with that of CHS 1606. Subsequently, each CMS with a synchronized clock can act as the CHS for other neighboring satellites.

Figure 17 illustrates the method to compute the offset between clock signals of CHS and other CMSs. In Figure 17, CHS 1606 only transmits the positive edge indication signal to all other CMSs in its cluster. In Figure 17, 1702 represents the axis for waveforms of the clock signals of CHS and other CMSs. The synchronization method between CHS 1606 and other CMSs requires only one-way transfer of positive edge indication signal. The two-way transfer of the positive edge indication signal is not needed because other CMSs can compute the ToF of the signal transmitted by CHS 1606. The CHS 1606 detects the positive edge 1752 of the CHS waveform 1750 of its clock signal. 1706 represents the CHS edge detection delay after which CHS 1606 starts transmitting the preamble of the positive edge indication signal whose duration is represented by 1704. The preamble of the positive edge indication signal is received by other CMSs after ToF that is different for each CMS. For example, the $CMS_1$ among other CMSs whose waveform of clock signal is represented by 1720, receives the positive edge indication signal of CHS after $ToF_1$ 1748, whereas $CMS_n$ among other CMSs receives the preamble of the positive edge indication signal after $ToF_n$ 1728. It is assumed that other CMSs know or can calculate (e.g., from a schedule or from time of transmit embedded in the positive edge indication signal 1752) the ToF of the signal received from CHS 1606. Other CMSs are required to start the counter module of their respective CMS waveform synchronizers after receiving the preamble of the positive edge indication signal and preferably stopping their counter modules after detecting the next positive edge of the clock signal. After computation of counter value, other CMSs can compute the offset of their clock signals from the clock signal of CHS 1606 themselves without requiring CHS 1606 to compute the counter value for each of the CMSs separately as is the case for UE 902 and serving CMS 924 where serving CMS 924 computes the counter value for each of the UEs in separate CSPE modules for each of the UE. Therefore, other CMSs do not transmit the preamble of the positive edge indication signal to CHS 1606. Other CMSs should calculate their clock offset using their counter values.

The following case-based model should be used for calculating the offset:

$$if\ [(CMS\ Counter\ Value_i + (ToF_i + CHS\ Edge\ Detection\ Delay +$$
$$CHS\ Preamble\ Duration\ 1718 + CMS_i\ Processing\ Delay\,) + ((ToF_i -$$
$$CMS_i\ Edge\ Detection\ Delay)] > T \qquad \text{Eq. (22)}$$

Then

$$offset_i = CMS\ Counter\ Value_i + (ToF_i + CHS\ Edge\ Detection\ Delay +$$
$$CHS\ Preamble\ Duration\ 1718 + CMS_i\ Processing\ Delay\,) - (T\ 1708 +$$
$$CMS_i\ Edge\ Detection\ Delay\,) \qquad \text{Eq. (23)}$$

Whereas,

$$if\ [(CMS\ Counter\ Value_i + (ToF_i + CHS\ Edge\ Detection\ Delay +$$
$$CHS\ Preamble\ Duration\ 1718 + CMS_i\ Processing\ Delay\,) + ((ToF_i -$$
$$CMS_i\ Edge\ Detection\ Delay)] < T \qquad \text{Eq. (24)}$$

Then

$$offset_i = CMS\ Counter\ Value_i + (ToF_i + CHS\ Edge\ Detection\ Delay +$$
$$CHS\ Preamble\ Duration\ 1718 + CMS_i\ Processing\ Delay\,) -$$
$$(CMS_i\ Edge\ Detection\ Delay\,) \qquad \text{Eq. (25)}$$

In Figure 17, $offset_1$ 1712 is computed by using the following equation;

$$offset_1\ 1712 = CMS\ Counter\ Value_1 1724 + (ToF_1\ 1748$$
$$+ CHS\ Edge\ Detection\ Delay\ 1706 + CHS\ Preamble\ Duration\ 1718$$
$$+ CMS_1\ Processing\ Delay\ 1710\,) -$$
$$(T\ 1708 + CMS_1\ Edge\ Detection\ Delay\ 1714\,) \qquad \text{Eq. (26)}$$

Whereas $offset_n$ 1738 of $CMS_n$ is computed by using following equation:

$$offset_n\ 1738\ =\ CMS_n\ Counter\ Value\ 1744\ +\ (ToF_n\ 1728\ +$$

$$CHS\ Edge\ Detection\ Delay\ 1706 + CHS\ Preamble\ Duration\ 1740 +$$

$$CMS_n\ Processing\ Delay\ 1742\ ) - (CMS_n\ Edge\ Detection\ Delay\ 1730\ )\quad Eq.\ (27)$$

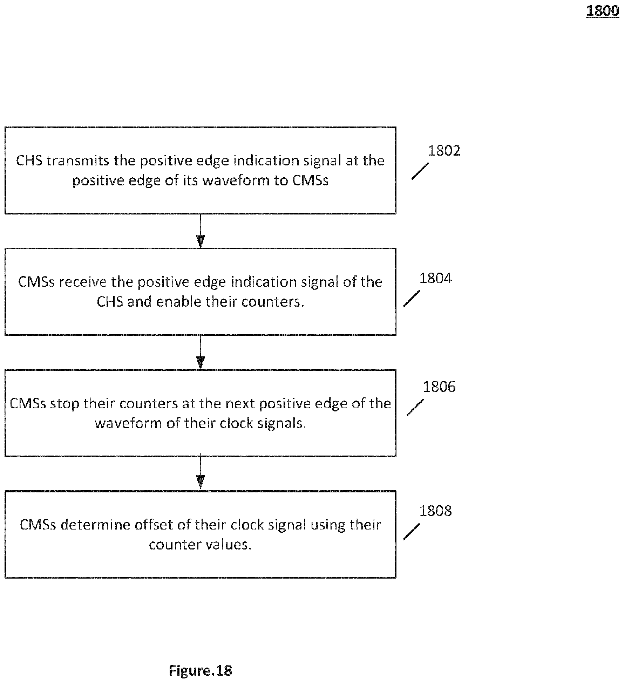

Figure 18 shows the flow graph for inter-satellite clock signal synchronization method. In step 1802, CHS 1606 transmits the positive edge indication signal at the positive edge of its waveform to other CMSs. In step 1804, all CMSs in the cluster receive the positive edge indication signal of the CHS 1606 and start their counter modules. On the next positive edge of the clock signal, other CMSs stops their counter modules and the resultant counter values are calculated as illustrated in step 1806. In step 1808, other CMSs determine offset of their clock signals from the clock signal of the CHS 1606 using their counter values.

In a further embodiment of the invention, the clock signal of a ground station is taken as a reference and CMSs in its coverage space synchronize their clock signals to it. The synchronized satellites then act as CHSs for their neighboring satellites. In this scenario, ground the clock signals of ground stations should also be synchronized with one another. The synchronization method among ground stations may be carried out directly between stations or can be achieved through satellites in another embodiment.

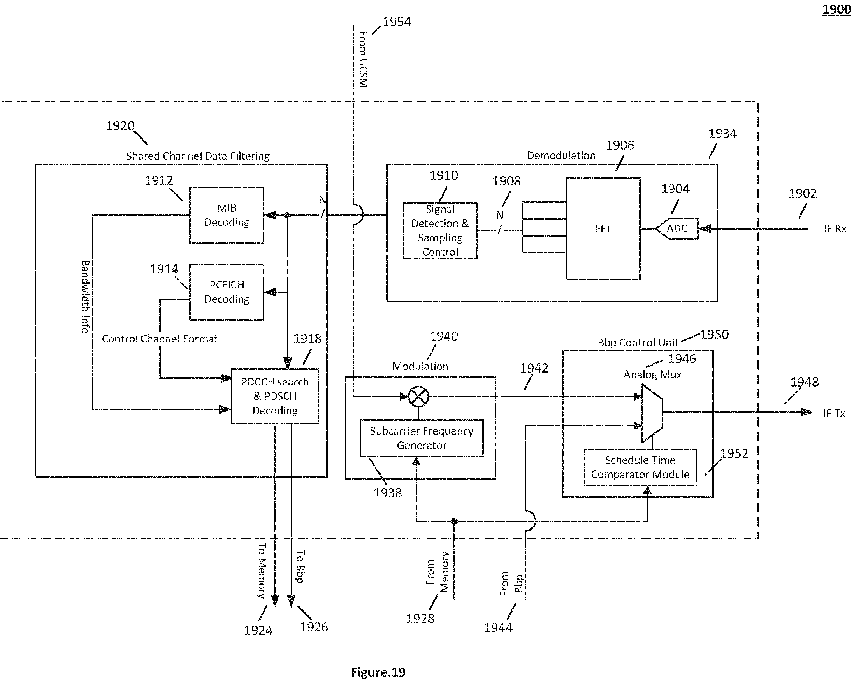

Figure 19 shows a block diagram 1900 of an embodiment of LTE Clock Signal Analyzer (UCSA) 106. The top-level block diagram illustrates an embodiment for the LTE standard. However, it is obvious to the one skilled in the art that UCSA 106 could be easily adapted for any similar communication technologies. UCSA 106 is responsible for extracting the information from a raw LTE signal that has been shifted to an intermediate frequency. In demodulation section 1934 of UCSA 106, data 1902 is first sampled using ADC 1904. Then FFT 1906 is applied to separate the values of different sub-carriers 1908. The LTE protocol uses two synchronization signals, namely Primary Synchronization Signal (PSS) and Secondary Synchronization Signal (SSS) that are present on the central subcarriers of an LTE channel. Signal detection and sampling control module 1910 uses synchronization symbols to recognize the start of LTE frames. Once it is done, data filtering method can be applied. In LTE, data to all users is sent over a shared channel called the Physical Downlink Shared Channel (PDSCH). The PDSCH is composed of multiple subcarrier frequencies and timeslots. The details of timeslots and subcarriers for PDSCH is beyond the scope of this disclosure but are well known to the ones skilled in the art. To decode data for a specific UE, a number of steps need to be performed. First the Master Information Block (MIB) needs to be decoded in MIB decoding block 1912 that resides inside shared channel data filtering section 1920. It is present on the central 72 subcarriers and broadcasts every 40 milliseconds. The MIB contains information about the allotted bandwidth which is then used to find the Physical Control Format Indicator Channel (PCFICH) in PCFICH decoding block 1914. The information from the PCFICH along with then MIB information is then used to read the Physical Downlink Control Channel (PDCCH) which contains uplink scheduling grants and checksums to indicate what data on the PDSCH is intended for the UE in PDCCH search and PDSCH decoding module 1918. PDCCH search and PDSCH decoding module 1918 filters the data intended for USPE 102 and stores it in memory module 108, whereas it transmits all other data to baseband processor through data path 1926.

Information regarding the synchronization schedule, Signal-Spec, and signal schedule is stored in memory module 108 by using data path 1924. The signal schedule will contain both the time slot for the signal and the subcarrier frequency to be used. Similarly, the synchronization schedule will contain multiple timeslots and multiple subcarrier frequencies for all the messages to be sent during the synchronization process.

Modulation module 1940 performs amplitude modulation of the data from UCSM through input data path 1954. Subcarrier frequency generator module 1938 reads the subcarrier frequency and timeslot information stored in the hardwired programmable registers of memory 108 through input connection 1928 and generates the appropriate frequency at the correct time to send to the mixer through connection 1942. Note that the generated frequency shifts the clock signal to only an intermediate frequency and then the IF-to-RF conversion module of the LTE (not shown here) converts the signal to RF.

Finally, BbP (baseband processor) control unit 1950 controls the baseband processor's access to the transmission path of the RF front end. The schedule time comparator module 1952 checks whether the clock signal needs to be transmitted according to the schedule that is read through connection 1928. If the clock signal needs to be transmitted, analog multiplexer 1946 selects the clock signal on line 1942; otherwise, it selects BbP's signal 1944. The selected signal is forwarded on line 1948 and sent to the RF front end.

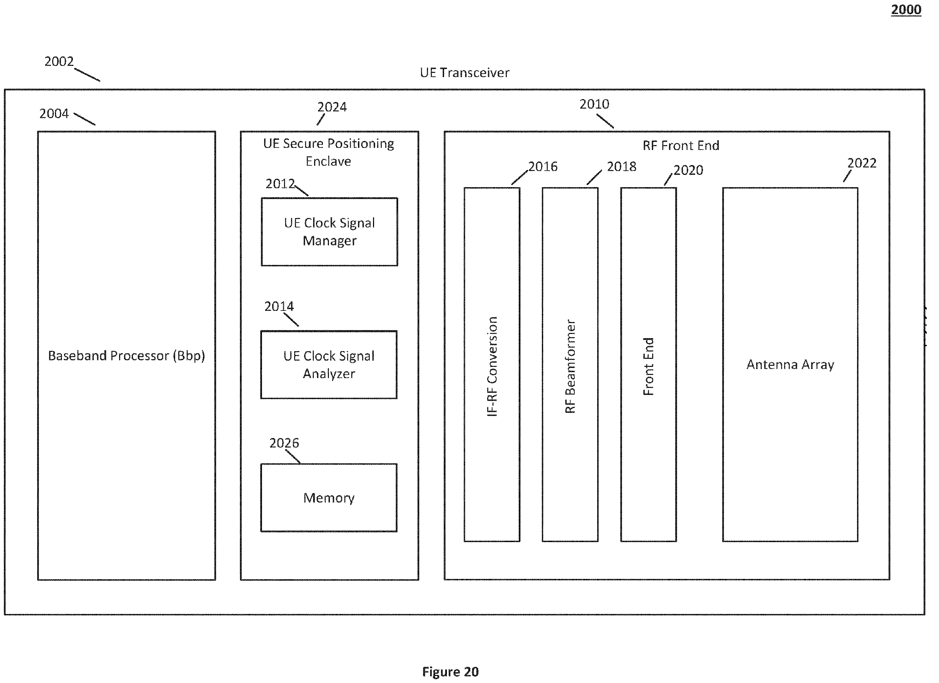

Figure 20 is a functional block diagram of an example UE transceiver comprised of USPE 2024. USPE 2024 is comprised of UCSM 2012, UCSA 2014, and memory 2026 and is installed on UE transceiver 2002 but it has no write hooks from the firmware and hence is not accessible through the firmware. UE transceiver 2002 is further comprised of an RF front end 2010 and baseband processor 2004. RF front end 2010 is comprised of IF-RF conversion module 2016, RF beamformer module 2018, front end module 2020, and antenna array 2022. The location finding technique described in the co-pending US patent application 63/266,487 relies on Tx time advance information. Without loss of generality, a firmware engineer or malicious entity skilled in the art can install kernel or device driver backdoors to obtain an illegitimate access to baseband processor 2004 of UE transceiver 2002 and then can lie about adjusting the Tx time advance which may result in incorrect computing of the geolocation of a UE by LEO satellites. Therefore, USPE module 2024 is deployed on UE transceiver 2002 and provides an alternate secure data path, inaccessible to baseband processor 2004, for directly transmitting the clock signal through RF front end 2010. USPE 2024 is not limited to the arrangements of the modules or transceiver shown in Figure 20 and can be deployed on any single chip or multi-chip transceiver.

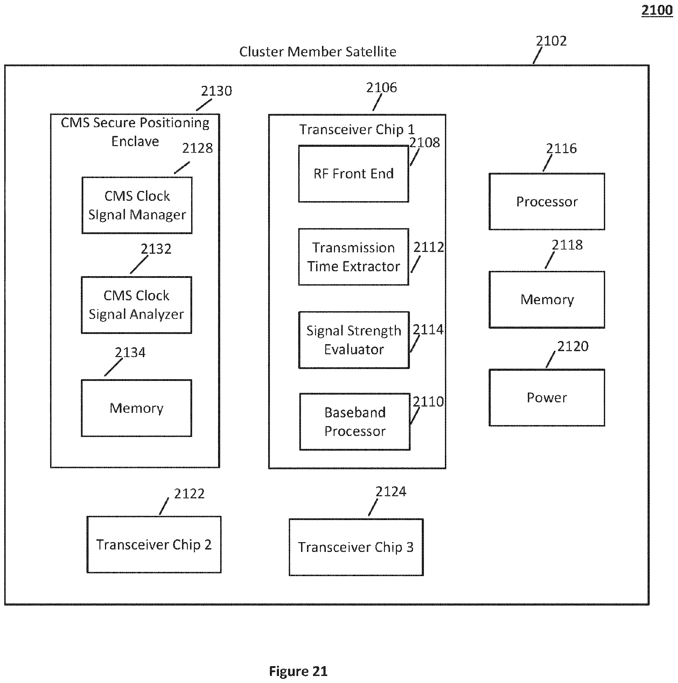

Figure 21 is a functional block diagram of CMS 2102 that is one member of a cluster consisting of a plurality of Cluster Member Satellites (CMSs). CMS 2102 receives a clock signal transmitted by LTE transceiver 2002. CMS 2102 is comprised of a processor 2116 and memory 2118 for providing computational power and storage for software, firmware, and data. Advanced models of CMSs may have powerful processors and large memory compared to that of currently deployed CMSs. CMS 2102 is further comprised of a power module 2120 that includes for example batteries, charging circuitry, and solar panels. CMS 2102 uses a first transceiver 2106 for communicating with a plurality of LTEs. CSPE module 2130 is also deployed on CMS 2102 and generates, processes, and computes stable clock signal to find the true geolocation coordinates of UEs in a secure manner. CSPE 2130 is comprised of CCSM 2128, CCSA 2132 and memory 2134. First transceiver 2106 is further comprised of an RF front end 2108 that transmits, receives, and processes RF signals; a transmission time extractor module 2112 that determines the transmission time of a positioning signal from a UE by using the method described in co-pending US patent application 63/266,487; a baseband processor 2110 that performs the baseband operations related to the communication with a plurality of UEs; and a signal strength evaluator 2114 that measures the signal strength or other metrics such as Signal-to-Noise Ratio (SNR) or CINR (Carrier-to-Interference-Plus-Noise Ratio) of the signals received from UEs. CMS 2102 also includes a second transceiver 2122 for communicating with a plurality of ground stations to execute the clock signal synchronization method and a third transceiver 2124 for communicating and synchronizing clocks over side links with a plurality of satellites inside or outside of its cluster in the satellite constellation.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of disclosed concept which is to be given the full breadth of the claims appended and any and all equivalents thereof.

**Claims**

1.   A cluster member satellite (CMS) of a non-terrestrial communication network, the CMS including a CMS secure positioning enclave (CSPE) module structured and configured to:

generate a CMS clock signal of the CMS; and
determine a clock offset between a UE clock signal of a user equipment (UE) and the CMS clock signal, wherein the LTE clock signal and the CMS clock signal each have a common time period T, wherein the clock offset may be used to determine geolocation coordinates of the UE, wherein the UE clock signal does not require digital processing through firmware of the LTE and can be transmitted directly through an RF front end of the LTE to the non-terrestrial communication network, wherein the clock offset is determined in the CSPE module by:

(a) detecting a positive edge of the CMS clock signal and in response thereto: (i) transmitting a CMS positive edge detection signal from the CMS to the UE, and (ii) starting a CMS counter of the CMS;
(b) receiving in the CMS from the LTE: (i) a LTE positive edge detection signal generated in the UE in response to detection of a positive edge of the LTE clock signal, and (ii) a UE counter value of a UE counter of the UE, wherein the UE counter value is determined based on the LTE counter starting in response to receipt in the LTE of the CMS positive edge detection signal and the LTE counter stopping in response to generation of the LTE positive edge detection signal;
(c) stopping the CMS counter of the CMS in response to receiving the UE positive edge detection signal and determining a CMS counter value of the CMS counter; and
(d) determining the clock offset as a function of the UE counter value, the CMS counter value and T.

2.   The CMS according to claim 1, wherein the CMS positive edge detection signal is not processed by firmware of the CMS before being transmitted.

3.   The CMS according to claim 1 or claim 2, wherein the CSPE module is structured and configured to determine a time of flight of the LTE positive edge detection signal from the LTE to the CMS as a function of the clock offset, wherein the time of flight may be used to determine the geolocation coordinates of the UE.

4. The CMS according to any preceding claim, wherein the CMS is structured and configured to: (i) receive from a cluster member coordinator of the a non-terrestrial communication network a schedule for LTEs to send signals to the non-terrestrial communication network for computing offsets, and (ii) transmit the schedule from the CMS to the UE, wherein the schedule is generated by the cluster member coordinator in response to receipt from the UE of a positioning request.

5. The CMS according to any preceding claim, wherein the CMS includes a stable clock generator for generating the CMS clock signal and a positive edge detector for detecting the positive edge of the CMS clock signal.

6. The CMS according to any preceding claim, wherein the CMS counter comprises a high frequency-based clock-enabled counter.

7. The CMS according to any preceding claim , wherein the determining the clock offset comprises cross correlating the LTE clock signal and the CMS clock signal.

8. The CMS according to any preceding claim , wherein the CMS clock signal is synchronized to a reference clock signal obtained from a cluster head satellite of a cluster to which the CMS belongs.

9. The CMS according to claim 8, wherein the CMS, after synchronizing the CMS clock signal to the reference clock signal, acts as a cluster head satellite for clock signal synchronization for neighboring satellites in the non-terrestrial communication network having clocks still not synchronized.

10. The CMS according to claim 9, wherein the neighboring satellites have their clocks synchronized to the CMS clock signal based on a one-way transfer of the CMS positive edge detection signal.

11. The CMS according to claim 10, wherein each neighboring satellite: (i) receives the CMS positive edge detection signal, (ii) in response to the CMS positive edge detection signal, starts a counter of the neighboring satellite, (iii) stops the counter of the neighboring satellite on a next positive edge of a clock signal of the of the neighboring satellite, (iv) determines an offset value and synchronizes the clock signal of the counter of the neighboring satellite based on at least a counter value of the counter of the neighboring satellite.

12. The CMS according to claim 9, wherein the neighboring satellites have their clocks synchronized to the CMS clock signal based on a two-way transfer of positive edge detection signals.

13. A method of determining a clock offset between a LTE clock signal of a user equipment (UE) and a CMS clock signal of a cluster member satellite (CMS) of a non-terrestrial communication network, wherein the LTE clock signal and the CMS clock signal have the time period T, wherein the clock offset may be used to determine geolocation coordinates of the UE, wherein the UE clock signal does not require digital processing through firmware of the LTE and can be transmitted directly through an RF front end of the LTE to the non-terrestrial communication network, the method comprising:

    (a) detecting a positive edge of the CMS clock signal and in response thereto: (i) transmitting a CMS positive edge detection signal from the CMS to the UE, and (ii) starting a CMS counter of the CMS;
    (b) receiving in the CMS from the LTE: (i) a LTE positive edge detection signal generated in the UE in response to detection of a positive edge of the LTE clock signal, and (ii) a UE counter value of a UE counter of the UE, wherein the UE counter value is determined based on the LTE counter staring in response to receipt in the LTE of the CMS positive edge detection signal and the LTE counter stopping in response to generation of the LTE positive edge detection signal;
    (c) stopping the CMS counter of the CMS in response to receiving the UE positive edge detection signal and determining a CMS counter value of the CMS counter; and
    (d) determining the clock offset as a function of the UE counter value, the CMS counter value and T.

14. The method according to claim 13, wherein the CMS positive edge detection signal is not processed by firmware of the CMS before being transmitted.

15. The method according to claim 13 or claim 14, further comprising determining a time of flight of the UE positive edge detection signal from the UE to the CMS as a function of the clock offset, wherein the time of flight may be used to determine the geolocation coordinates of the UE.

16. The method according to any one of claims 13 to 15, further comprising: (i) receiving in the CMS from a cluster member coordinator of the a non-terrestrial communication network a schedule for UEs to send signals to the non-terrestrial communication network for computing offsets, and (ii) transmitting the schedule from the CMS to the LTE, wherein the schedule is generated by the cluster member coordinator in response to receipt from the UE of a positioning request.

17. The method according to any one of claims 13 to 16, further comprising synchronizing the CMS clock signal to a reference clock signal obtained from a cluster head satellite of a cluster to which the CMS belongs.

18. The method according to claim 17, further comprising, after synchronizing the CMS clock signal to the reference clock signal, using the CMS for clock signal synchronization of neighboring satellites in the non-terrestrial communication network having clocks still not synchronized.

19. A user equipment (UE) structured to communicate with a cluster member satellite (CMS) of a non-terrestrial communication network to enable the CMS to determine a clock offset between a LTE clock signal of the (LTE) and a CMS clock signal of the CMS, wherein the LTE clock signal and the CMS clock signal each have a common time period T, wherein the clock offset may be used by the CMS to determine geolocation coordinates of the UE, wherein the UE clock signal does not require digital processing through firmware of the LTE, the LTE including a LTE secure positioning enclave (USPE) module structured and configured to:

(a) receive a CMS positive edge detection signal from the CMS, the CMS positive edge detection signal being generated in response the CMS detecting a positive edge of the CMS clock signal;
(b) start a UE counter of the UE in response to receiving the CMS positive edge detection signal from the CMS;
(c) generate and transmit to the CMS: (i) a LTE positive edge detection signal generated in the UE in response to detection of a positive edge of the LTE clock signal, and (ii) a UE counter value of the UE counter of the UE, wherein the UE counter value is determined based on the UE counter stopping in response to generation of the UE positive edge detection signal, wherein the clock offset may be determined in the CMS as a function of the UE counter value, a CMS counter value of a counter of the CMS and T.

20. The LTE according to claim 19, further comprising a LTE stable clock signal generator that generates a stable LTE clock signal waveform of the LTE clock signal.

21. The LTE according to claim 20, wherein the LTE stable clock signal generator comprises: (i) a precision clock generator that generates a stable high-frequency clock waveform signal, (ii) an N frequency synthesizer that generates a low-frequency waveform signal using the stable high-frequency clock waveform signal, (iii) an M frequency synthesizer that generates a further high-frequency waveform signal using the stable high-frequency clock waveform signal, and (iv) a pulse generator structured to generate a pulse waveform of the UE clock signal using outputs of the N frequency synthesizer and the M frequency synthesizer.

22. The LTE according to claim 21, wherein the precision clock generator is a miniature chip-scale atomic clock based on cesium, ytterbium, or another suitable substance to generate a stable waveform signal.

23. The LTE according to any one of claims 20 to 22, wherein a frequency of the waveform of the stable LTE clock signal waveform depends on a maximum time of flight of a positioning signal to the non-terrestrial communication network.

24. The LTE according to any one of claims 19 to 23, further comprising a secure device ID hardwired on a chip of the LTE at the time of manufacturing that is neither programmable nor editable.

25. The LTE according to any one of claims claim 19 to 24, wherein the non-terrestrial communication network comprises one or more of a number of unmanned aircraft systems (UAS) or a number of high-altitude platform stations (HAPs).

26. The LTE according to any one of claims 19 to 25, wherein the non-terrestrial communication network comprises one or more of a number of low earth orbiting satellites (LEOs), a number of medium earth orbiting satellite (MEOs), or a number of geostationary satellites (GEOs).

27. A method of enabling a cluster member satellite (CMS) of a non-terrestrial communication network to determine a clock offset between a UE clock signal of a user equipment (UE) and a CMS clock signal of the CMS, wherein the LTE clock signal and the CMS clock signal each have a common time period T, and wherein the clock offset may be used by the CMS to determine geolocation coordinates of the LTE, the method comprising:

(a) receiving in the UE a CMS positive edge detection signal from the CMS, the CMS positive edge detection signal being generated in response the CMS detecting a positive edge of the CMS clock signal;

(b) starting a UE counter of the UE in response to receiving the CMS positive edge detection signal from the CMS;

(c) generating and transmitting from the UE to the CMS: (i) a UE positive edge detection signal generated in the UE in response to detection of a positive edge of the UE clock signal, and (ii) a UE counter value of the UE counter of the UE, wherein the UE counter value is determined based on the UE counter stopping in response to generation of the UE positive edge detection signal, wherein the clock offset may be determined in the CMS as a function of the UE counter value, a CMS counter value of a counter of the CMS and T.

100

102

UE Secure Positioning Enclave

104

UE Clock Signal Manager

106

UE Clock Signal Analyzer

108

Memory

Figure 1

**Figure 2**

EP 4 261 563 A2

300

104

UE's Clock Signal Manager

304

Stable Clock Signal Generator

306
Precision Clock Generator

308
$\div N$

312
$\div M$

310
Pulse Generator

314
UE Clock Offset Calculator

318
Security Inspector

320
Encoder

Figure 3

EP 4 261 563 A2

400

310 Pulse Generator

402 Counter Module
Clk
Rst
Out
N

408 Binary Comparator

410 Pulse Waveform

404 High frequency Clk
406 Edge Detection

**Figure 4**

EP 4 261 563 A2

500

502

Pulse On_Time

Repetition Period

504

t

**Figure 5**

600

CMS's Clock Signal Manager

204

604

606 Precision Clock Generator

Stable Clock Signal Generator

608 ÷N

612 ÷M

610 Pulse Generator

614 CMS's Waveform Synchronizer

618 Decoder

616 Security Inspector

620 Clock Signal Correlator

Figure 6

702

704

UE

Serving CMS

706

←──────Positive Edge Indication Signal──────

708

──────Positive Edge Indication Signal──────→

710

──────UE's Counter Value──────→

Figure.7

EP 4 261 563 A2

Figure.8A

EP 4 261 563 A2

Figure.8B

EP 4 261 563 A2

Figure.8C

EP 4 261 563 A2

Figure.9

1000

UE Clock Offset Calculator                    314

1004                                           1006

Positive Edge
Detector

Positive Edge
Indication Signal
Generator

1008

Counter Module

Figure.10

1100

1102

UE Clock offset Calculator in the UCSM is enabled

1104

The counter module in the UE clock offset calculator is enabled after receiving the preamble of the positive edge indication signal from the serving CMS.

1106

A positive edge detector (PED) detects the positive edge of the clock signal of the UE and enables Positive Edge Indication Signal Generator (PEISG).

1108

After generation of the positive edge indication signal, it is sent to the UCSA and counter module in the UE clock offset calculator is stopped.

1110

Positive Edge Indication Signal generated by PEISG is transmitted by UCSA through a transmission channel to serving CMS

1112

UCSA transmits the counter value to its serving CMS

Figure.11

1200

614

CMS's Waveform Synchronizer

1204

Positive Edge
Detector

1206

Positive Edge
Indication Signal
Generator

1208

Counter Module

1210

Offset Calculator

Figure.12

1300

Serving CMS detects the positive edge of the waveform of the clock signal using the positive edge detector(PED) of the CMS waveform synchronizer. — 1302

PED enables a positive edge indication signal generator (PEISG) that generates the preamble of the positive edge indication signal and send it to the CCSA which transmit it to the UEs. — 1304

Counter module of serving CMS's waveform synchronizer is enabled after transmitting the positive edge indication signal generated by PEISG. — 1306

CCSA of serving CMS receives the positive edge indication signal in the UL pos edge opportunity and stops the counter module in the waveform synchronizer. — 1308

CCSA of serving CMS receives the counter value from UE and computes the offset using serving CMS counter value and UE counter value — 1310

Figure.13

**Figure.14**

Figure.15

EP 4 261 563 A2

EP 4 261 563 A2

Figure.16

Figure.17

EP 4 261 563 A2

```
┌─────────────────────────────────────────────┐
│ CHS transmits the positive edge indication   │      1802
│ signal at the positive edge of its waveform  │
│ to CMSs                                       │
└─────────────────────────────────────────────┘
                      │
                      ▼
┌─────────────────────────────────────────────┐
│ CMSs receive the positive edge indication    │      1804
│ signal of the CHS and enable their counters. │
└─────────────────────────────────────────────┘
                      │
                      ▼
┌─────────────────────────────────────────────┐
│ CMSs stop their counters at the next positive│      1806
│ edge of the waveform of their clock signals. │
└─────────────────────────────────────────────┘
                      │
                      ▼
┌─────────────────────────────────────────────┐
│ CMSs determine offset of their clock signal  │      1808
│ using their counter values.                  │
└─────────────────────────────────────────────┘
```

Figure.18

Figure.19

EP 4 261 563 A2

Figure 20

Cluster Member Satellite

2102

CMS Secure Positioning Enclave 2130

CMS Clock Signal Manager 2128

CMS Clock Signal Analyzer 2132

Memory 2134

Transceiver Chip 1 2106

RF Front End 2108

Transmission Time Extractor 2112

Signal Strength Evaluator 2114

Baseband Processor 2110

Processor 2116

Memory 2118

Power 2120

Transceiver Chip 2 2122

Transceiver Chip 3 2124

EP 4 261 563 A2

Figure 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63322760
- US 63266487

- WO 63266487 A